# EUROPEAN PATENT APPLICATION

(11) **EP 4 644 122 A1**
(43) Date of publication of application: **05.11.2025**
(21) Application number: 23912312.8
(22) Date of filing: 28.12.2023
(51) Int. Cl.: B32B 27/30, B32B 27/28, C25B 1/04, C25B 9/00, C25B 9/23, C25B 13/08, H01M 8/02, H01M 8/10

(54) **MEMBRANE, MEMBRANE ELECTRODE ASSEMBLY, AND WATER ELECTROLYSIS DEVICE**

(30) Priority: 28.12.2022 JP 2022211800
(71) Applicant: INSTITUTE OF SCIENCE TOKYO, Tokyo 152-8550 (JP); Nippon Kayaku Kabushiki Kaisha, Tokyo 100-0005 (JP)
(72) Inventor: YAMAGUCHI, Takeo, Tokyo 152-8550 (JP); MIYANISHI, Shoji, Tokyo 152-8550 (JP); ILLATHVALAPPIL, Rajith, Tokyo 152-8550 (JP)
(74) Representative: INNOV-GROUP
(86) International application number: PCT/JP2023/047241
(87) International publication number: WO 2024/143535

(57) **Abstract**

A membrane having excellent radical durability and low gas permeability, a membrane electrode assembly including the membrane, and a water electrolysis apparatus are provided. A membrane having a laminated structure including a layer B1, a layer A, and a layer B2 in this order, in which the layer A contains a hydrocarbon-based polymer (a) which has an ionic group and may be fluorine-substituted, and each of the layers B1 and B2 contains a perfluoro-carbon polymer (b) having an ionic group.

## Description

### Technical Field

The present invention relates to a membrane, a membrane electrode assembly, and a water electrolysis apparatus.

### Background Art

Since electrolysis of water (water electrolysis) makes it possible to convert electric power into hydrogen without generating carbon dioxide, it has been attracting attention as a power-hydrogen storage system for storing renewable energy in the form of hydrogen energy. Examples of water electrolysis methods include alkaline water electrolysis, solid-state alkaline water electrolysis, and solid-state polymer water electrolysis.

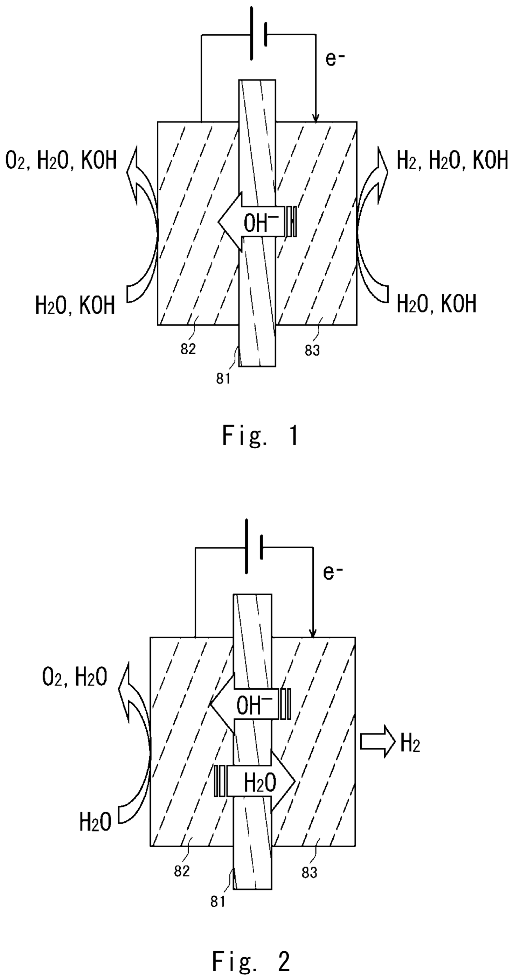

Fig. 1 shows an example of hydrogen non-pressurized-type solid-state alkaline water electrolysis. In the example shown in Fig. 1, when a voltage is applied across both electrodes while supplying an electrolytic solution to each of an anode 82 side and a cathode 83 side, the below-shown reaction occurs at the cathode 83, and a hydrogen gas is thereby generated.

2H₂O + 2e⁻ → 2OH⁻ + H₂

Hydroxide ions (OH⁻) pass through an electrolyte membrane 81 and move to the anode 82. The below-shown reaction occurs at the anode 82, and an oxygen gas is thereby generated.

2OH⁻ → H₂O + 1/2O₂ + 2e⁻

The generated hydrogen and oxygen are discharged together with the electrolyte, and after water is separated therefrom by a gas-liquid separator, they are stored in storage tanks or the like. In the example shown in Fig. 1, since the generated hydrogen gas is at a normal pressure, it is necessary to pressurize the generated hydrogen gas by a compressor or the like when it is stored in the storage tank.

Fig. 2 shows another example of hydrogen pressurized-type solid-state alkaline water electrolysis. In the example shown in Fig. 2, water or an electrolytic solution is supplied to an anode 82 side, and water molecules pass through an electrolyte membrane 81 and move to a cathode 83. Reactions similar to those shown in Fig. 1 occur at the respective electrodes, and a highly-concentrated hydrogen is discharged at the cathode 83. In the example shown in Fig. 2, the generated hydrogen gas is gradually pressurized. Therefore, it is not necessary to compress the generated hydrogen gas when it is stored in the storage tank. Considering the power of the compressor, it is easier to improve the efficiency of the production of hydrogen in the hydrogen pressurized-type solid-state alkaline water electrolysis. The same is true for other electrolysis methods, so that gas pressurized-type water electrolysis has been studied.

An anion conducting membrane is known as a membrane for solid-state alkaline water electrolysis. The inventors of the present application disclose a polymer that can be used for an anion conducting membrane in Patent Literature 1. Since the polymer disclosed in Patent Literature 1 is a polyphenylene-based polymer in which there is no ether bond in the principal chain, it has excellent durability against alkalis.

Meanwhile, an electrolyte membrane using a perfluoro-sulfonic acid polymer is known as a proton conducting membrane (e.g., Patent Literature 2). It has been known that in this perfluoro-sulfonic acid polymer, sulfonic acid groups gather like a reversed micelle and thereby form microscopic voids (a cluster structure) (e.g., Patent Literature 3).

### Citation List

### Patent Literature

Patent Literature 1: Japanese Unexamined Patent Application Publication No. 2021-042351
Patent Literature 2: Japanese Unexamined Patent Application Publication No. 2017-036360
Patent Literature 3: Japanese Unexamined Patent Application Publication No. 2005-032543

### Summary of Invention

### Technical Problem

The anion conducting membrane using a polymer disclosed in Patent Literature 1 has excellent durability against alkalis. However, it has been desired to further improve durability against OH radicals generated in water electrolysis.

Meanwhile, the perfluoro-sulfonic acid polymer has high gas permeability due to the above-described formation of the cluster structure. Therefore, in the gas pressurized-type water electrolysis, in particular, there are a risk that, for example, the generated hydrogen gas may pass through the membrane and move to the anode side, and a risk that the oxygen gas may move to the cathode side.

The present invention has been made in view of the above-described problem, and an object thereof is to provide a membrane having excellent radical durability and low gas permeability, a membrane electrode assembly including the membrane, and a water electrolysis apparatus.

### Solution to Problem

The present invention provides membranes, membrane electrode assemblies, and water electrolysis apparatuses having structures or configurations specified in the below-described Items [1] to [14].
[1] A membrane having a laminated structure including a layer B1, a layer A, and a layer B2 in this order, in which
   the layer A contains a hydrocarbon-based polymer (a) which has an ionic group and may be fluorine-substituted; and
   each of the layers B1 and B2 contains a perfluoro-carbon polymer (b) having an ionic group.
[2] The membrane described in Item [1], in which the hydrocarbon-based polymer (a) includes a polyarylene polymer.
[3] The membrane described in Item [1] or [2], in which the hydrocarbon-based polymer (a) contains a constituent unit represented by a below-shown General Formula (1), 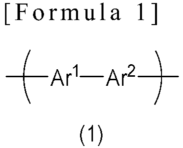 where,
   Ar¹ is an aromatic group having an ionic group, or a group in which an aromatic ring having an ionic group is connected through a single bond, in which a plurality of Ar¹ are identical to each other or different from each other,
   Ar² is an aromatic group having no ionic group, or a group in which two or more aromatic rings having no ionic group are connected through a single bond or a spiro atom, in which a plurality of Ar² are identical to each other or different from each other, and
   the aromatic ring of Ar¹ is connected to the aromatic ring of Ar² through a single bond.
[4] The membrane described in any one of Items [1] to [3], in which
   the layer A contains a porous base material and the hydrocarbon-based polymer (a), and
   pores of the porous base material are filled with the hydrocarbon-based polymer (a).
[5] The membrane described in Item [4], in which the porous base material is a polyolefin-based porous base material.
[6] The membrane described in any one of Items [1] to [5], in which a thickness of the layer A is 10 to 100 µm.
[7] The membrane described in any one of Items [1] to [6], in which the ionic group of the hydrocarbon-based polymer (a) is an acidic group and has proton conductivity.
[8] The membrane described in any one of Items [1] to [7], in which the ionic group of the hydrocarbon-based polymer (a) is a group selected from a quaternary ammonium group and an imidazolium group, and has anionic conductivity.
[9] The membrane described in any one of Items [1] to [8], in which the perfluoro-carbon polymer (b) has a structure represented by a below-shown General Formula (2A), 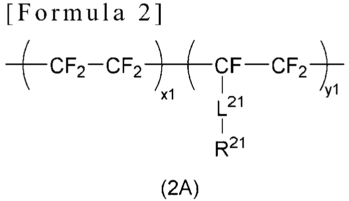 where,
   R²¹ is an ionic group,
   L²¹ is a divalent linking group, and
   x1 and y1 are each independently an integer of 1 or larger.
[10] The membrane described in any one of Items [1] to [9], in which the ionic group of the perfluoro-carbon polymer (b) is a carboxylic acid group, a sulfonic acid group, or an amino group.
[11] The membrane described in any one of Items [1] to [10], in which the layer B1 and/or the layer B2 further contains a radical scavenger.
[12] The membrane described in any one of Items [1] to [11], in which thicknesses of the layers B1 and B2 are each independently 0.1 to 20 µm.
[13] A membrane electrode assembly including:
   a membrane described in any one of Items [1] to [12];
   an anode catalyst; and
   a cathode catalyst.
[14] A water electrolysis apparatus including the membrane electrode assembly described in Item [13].

### Advantageous Effects of Invention

According to the present invention, it is possible to provide a membrane having excellent radical durability and low gas permeability, a membrane electrode assembly including the membrane, and a water electrolysis apparatus.

### Brief Description of Drawings

Fig. 1 is a schematic diagram showing an example of hydrogen non-pressurized-type solid-state alkaline water electrolysis;
Fig. 2 is a schematic diagram showing an example of hydrogen pressurized-type solid-state alkaline water electrolysis;
Fig. 3 is a schematic diagram showing an example of a membrane in an embodiment;
Fig. 4 is a schematic diagram showing an example of a cluster network;
Fig. 5 is a schematic diagram showing an example of a membrane electrode assembly and a water electrolysis apparatus;
Fig. 6 is a schematic cross-sectional diagram showing an example of an anode catalyst;
Fig. 7 is a schematic cross-sectional diagram showing an example of an anode catalyst;
Fig. 8 is a schematic cross-sectional diagram showing an example of a cathode catalyst;
Fig. 9 shows graphs showing gas permeability evaluation results;
Fig. 10 shows a graph and the like showing radical durability evaluation results; and
Fig. 11 is a graph showing a MEA performance evaluation result.

### Description of Embodiments

Structures or configurations of a membrane, a membrane electrode assembly, and a water electrolysis apparatus according to the present invention will be described hereinafter. To clarify the explanation, the following descriptions and drawings are simplified as appropriate. Further, it may be understood that matters necessary for implementation of the present invention that are not specifically mentioned in this specification are design matters which are determined by a person skilled in the art based on related art in the relevant field.

Note that in the present invention, "to" indicating a numerical range includes the upper and lower limit values unless otherwise specified.

In the present invention, a "polymer" includes "copolymer" unless otherwise specified.

In the present invention, an "ionic group" indicates a functional group that has a dissociative property and can exchange ions.

Further, in the present invention, a hydrocarbon-based polymer (a) which has an ionic group and may be fluorine-substituted is also simply referred to as a "hydrocarbon-based polymer (a)". Further, a perfluoro-carbon polymer (b) having an ionic group is also simply referred to as a "perfluoro-carbon polymer (b)".

### [Membrane]

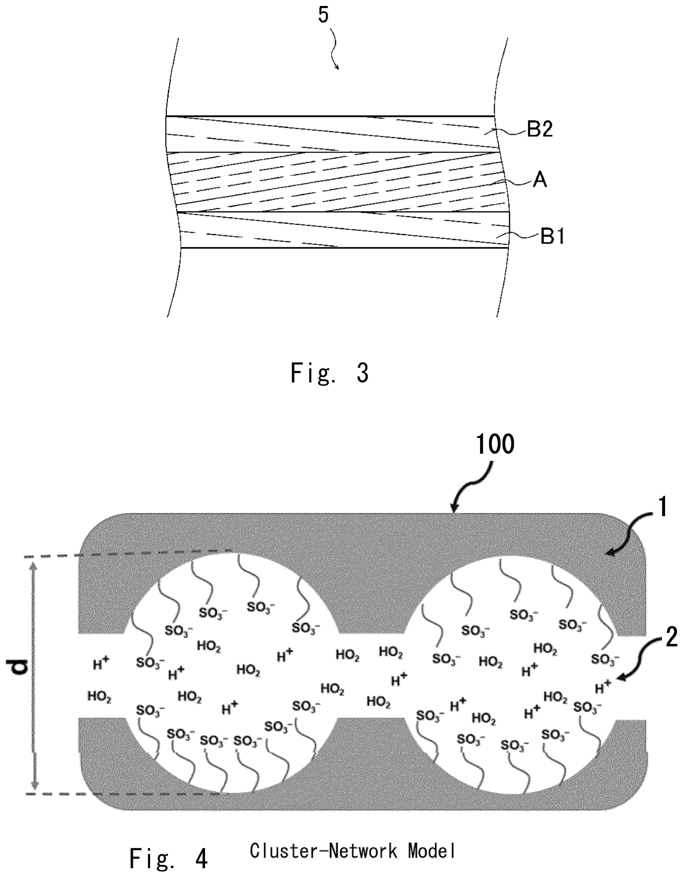

A structure of a membrane according to the present invention will be briefly described with reference to Fig. 3. A membrane 5 according to the present invention is a membrane having a laminated structure including a first layer B1, a second layer A, and a third layer B2 in this order, in which the layer A contains a hydrocarbon-based polymer (a) which has an ionic group and may be fluorine-substituted, and each of the layers B1 and B2 contains a perfluoro-carbon polymer (b) having an ionic group.

The above-described membrane 5 according to the present invention includes the layer A containing the hydrocarbon-based polymer (a). Since the hydrocarbon-based polymer (a) has low gas permeability, gas permeation can be suppressed as a whole membrane. Further, the membrane 5 according to the present invention includes the layers B1 and B2 each containing the perfluoro-carbon polymer (b) on a surface on which an electrode (catalyst) is disposed. This perfluoro-carbon polymer (b) has excellent alkali durability and radical durability. Further, the layers B1 and B2 prevent OH radicals generated at the electrode and the hydrocarbon-based polymer (a) contained in the layer A from coming into contact with each other, so that the radical durability as a whole membrane is improved.

By adopting the above-described specific laminated structure as describe above, it is possible to obtain a membrane having excellent radical durability and low gas permeability, suitable as an electrolyte membrane.

The thickness of the layer A may be adjusted as appropriate according to the required performance. In order to reduce the gas permeability and improve the mechanical strength of the membrane, the thickness of the layer A is preferably 10 µm or larger, more preferably 15 µm or larger, still more preferably 20 µm or larger, and particularly preferably 25 µm or larger. On the other hand, in order to improve the ion conductivity, the thickness of the layer A is preferably 100 µm or smaller, more preferably 80 µm or smaller, still more preferably 75 µm or smaller, and particularly preferably 50 µm or smaller.

The thicknesses of the layers B1 and B2 may be adjusted as appropriate according to the required performance. In order to improve the radical durability and the mechanical strength of the membrane, the thicknesses of the layers B1 and B2 are preferably each independently 0.05 µm or larger, more preferably 0.1 µm or larger, still more preferably 0.5 µm or larger, still more preferably 1.0 µm or larger, and particularly preferably 5 µm or larger. On the other hand, in order to improve the ion conductivity, the thicknesses of the layers B1 and B2 are preferably each independently 50 µm or smaller, more preferably 10 µm or smaller, still more preferably 5 µm or smaller, still more preferably 1 µm or smaller, and particularly preferably 0.1 µm or smaller.

### <Layer A>

The layer A contains a hydrocarbon-based polymer (a) which has an ionic group and may be halogen-substituted. The hydrocarbon-based polymer (a) is a polymer of which the principal chain is composed of a hydrocarbon (some hydrogen atoms may be halogen (fluorine)-substituted). Since this polymer does not have an oxygen atom, a sulfur atom, a silicon atom, and the like in its principal chain, it has excellent chemical durability such as alkali durability. In view of the chemical durability, the carbon constituting the principal chain preferably has no oxo group (=O).

The hydrocarbon-based polymer (a) preferably contains a polyarylene polymer because it suppresses gas permeation. Note that in this specification, a polyarylene polymer refers to a polymer having two or more arylene groups in its principal chain.

Since the polyarylene polymer imparts excellent ionic conductivity to the pore-filling membrane, it is preferably a polymer having a constituent unit represented by the below-shown General Formula (1) (also referred to as a constituent unit (1)), 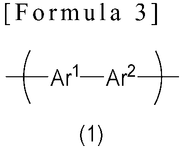 where,
Ar¹ is an aromatic group having an ionic group, or a group in which an aromatic ring having an ionic group is connected through a single bond, in which a plurality of Ar¹ are identical to each other or different from each other,
Ar² is an aromatic group having no ionic group, or a group in which two or more aromatic rings having no ionic group are connected through a single bond or a spiro atom, in which a plurality of Ar² are identical to each other or different from each other, and
the aromatic ring of Ar¹ is connected to the aromatic ring of Ar² through a single bond.

The polymer (1) is a polymer having two or more constituent units (1) described above, and has such a structure that Ar¹ having an ionic group and Ar² having no ionic group are alternately arranged. The aromatic group of Ar¹ is bonded with the aromatic group of Ar² through a single bond, and they form the principal chain. There are no etheric oxygen (-O-) skeleton, no sulfonyl (-S(=O)₂-) skeleton, and no carbonyl (-C(=O)-) skeleton in the principal chain skeleton, so that the chemical durability, especially the alkali durability, is excellent. Note that the aromatic ring refers to an aromatic ring constituting the principal chain, and the aromatic ring constituting the principal chain may have an additional aromatic ring as a substituent.

Ar¹ is an aromatic group having an ionic group, or a group in which an aromatic ring having an ionic group is connected through a single bond. Note that the ionic group refers to a functional group that has a dissociative property and can exchange ions.

In the case where proton conductivity is imparted to the membrane according to this embodiment, the ionic group is preferably an acidic group, and the acidic group is preferably a sulfonic acid group (-SO₃H group), a phosphoric acid group (-H₂PO₄ group), or a carboxylic acid group (-COOH group). More preferably, the acidic group is a sulfonic acid group. Note that H of the aforementioned acidic group may be dissociated, or substituted with an alkali metal ion, an alkaline earth metal ion, or the like.

Further, in the case where anion conductivity is imparted to the membrane according to this embodiment, the ionic group is preferably a quaternary ammonium group or an imidazolium group, and more preferably a quaternary ammonium group. The quaternary ammonium group is preferably a quaternary alkylammonium group in view of the alkali durability. Note that examples of the quaternary alkylammonium group include those in which alkyl groups bonded to nitrogen atoms are bonded to each other and thereby form a ring structure. For example, the quaternary alkylammonium group is an azaadamantyl group or a quinuclidinium group.

Preferred specific examples of the quaternary ammonium group include groups represented by the below-shown Formulae (e-1) to (e-8). Further, preferred specific examples of the imidazolium group include a group represented by the below-shown Formula (f-1), and more preferably a group represented by the below-shown Formula (f-2) or a group represented by the below-shown Formula (f-3).

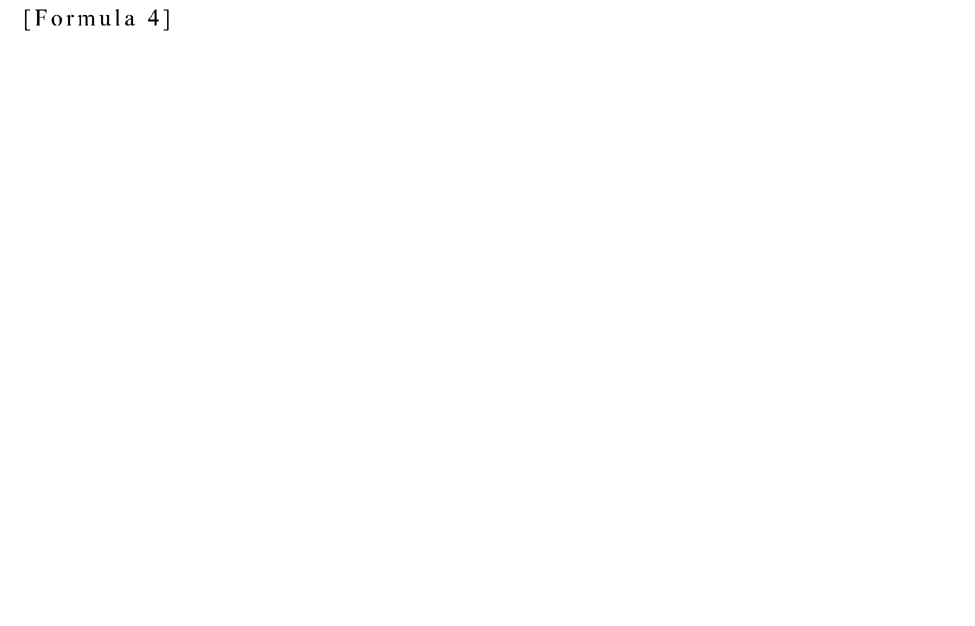

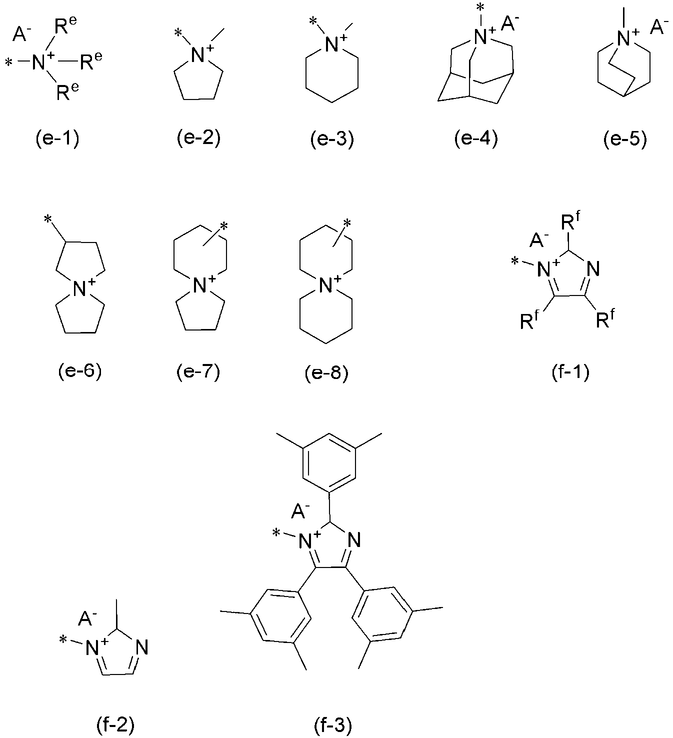

In the formula, R^{e} each independently represents a linear, branched, or cyclic alkyl group having a carbon number of 1 to 6; R^{f} each independently represents a hydrogen atom, a linear or branched alkyl group having a carbon number of 1 to 4, or an aromatic group which may have a substituent; and A⁻ represents an anion having a valence of 1 or 2 or larger. Further, when there are a plurality of R^{e} or R^{f}, the plurality of R^{e} or R^{f} may be identical to each other or different from each other. Note that * in the formula indicates a bonding hand which bonds to an aromatic ring side constituting the principal chain in Ar¹.

Specific examples of the alkyl group in the aforementioned R^{e} include a methyl group, an ethyl group, a propyl group, a butyl group, a pentyl group, a hexyl group, a cyclohexyl group, and the like. Specific examples of the alkyl group in the aforementioned R^{f} include a methyl group, an ethyl group, a propyl group, a butyl group, and the like. Further, examples of the aromatic group in R^{f} include a phenyl group and the like, and examples of the substituent of the phenyl group include an alkyl group having a carbon number of 1 to 6 and the like.

As the aforementioned A⁻, an inorganic anion is preferred, and its examples include a chloride ion (Cl⁻), a bromide ion (Br⁻), an iodide ion (I⁻), a bicarbonate ion (HCO₃⁻), a carbonate ion (CO₃²⁻), a hydroxide ion (OH⁻), and the like.

The aforementioned ionic group may be directly bonded to the aromatic ring constituting the principal chain in Ar¹, or may further have a linking group and be bonded to the aromatic ring constituting the principal chain through the linking group. The linking group means an organic group that links an acidic group, a quaternary ammonium group, or an imidazolium group of the ionic group with the aromatic ring constituting the principal chain. This organic group is preferably a linear or branched alkylene group, and more preferably a linear alkylene group. The carbon number of this alkylene group can be adjusted as appropriate according to the physical properties required for the hydrocarbon-based polymer (a). For example, by setting the carbon number of the alkylene group to 20 or smaller, preferably 16 or smaller, more preferably 12 or smaller, the ionic group capacity of the hydrocarbon-based polymer (a) increases. On the other hand, by setting the carbon number of the alkylene group to 2 or larger, preferably 4 or larger, more preferably 6 or larger, the solubility and the swelling resistance are improved, so that the hydrocarbon-based polymer (a) can be easily filled into the porous base material.

It is sufficient if the number of ionic groups in one aromatic ring constituting the principal chain in Ar¹ is 1 or larger, and it is preferably 1 or 2 in view of the ionic conductivity and the stability of the polymer.

The aromatic ring constituting the principal chain in Ar¹ may be a condensed ring such as a naphthalene ring or an antrancene ring in addition to a benzene ring, or a heterocycle (e.g., thiophene or the like) containing an oxygen atom (O), a nitrogen atom (N), or a sulfur atom (S). Further, it may have a structure in which these aromatic rings are connected by a single bond. Examples of the structure in which a plurality of rings are connected by a single bond include biphenyl, terphenyl, fluorene, and the like.

The aromatic ring constituting the principal chain in Ar¹ may further have, in addition to the aforementioned ionic group, a substituent other than the ionic group. Examples of the substituent include an alkyl group which has a carbon number of 1 to 20 and may have a substituent, a phenyl group which may have a substituent, a halogeno group, and the like.

Specific examples of the alkyl group include alkyl groups such as a methyl group, an ethyl group, a propyl group, an n-butyl group, a tert-butyl group, a pentyl group, a hexyl group, and an octyl group, and it may have, as a substituent, a phenyl group, a halogeno group, and the like. Further, examples of the substituent that the phenyl group may have include an alkyl group having a carbon number of 1 to 6, a halogeno group, and the like. Further, examples of the halogeno group include a fluoro group, a chloro group, a bromo group, an iodine group, and the like.

In order to improve the mechanical strength, the chemical durability, and the ionic conductivity, the aforementioned Ar¹ of the hydrocarbon-based polymer (a) is preferably a group represented by one of the below-shown Formulae (a-1) to (a-10).

Note that the plurality of Ar¹ in the polymer may be identical to each other or different from each other.

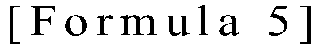

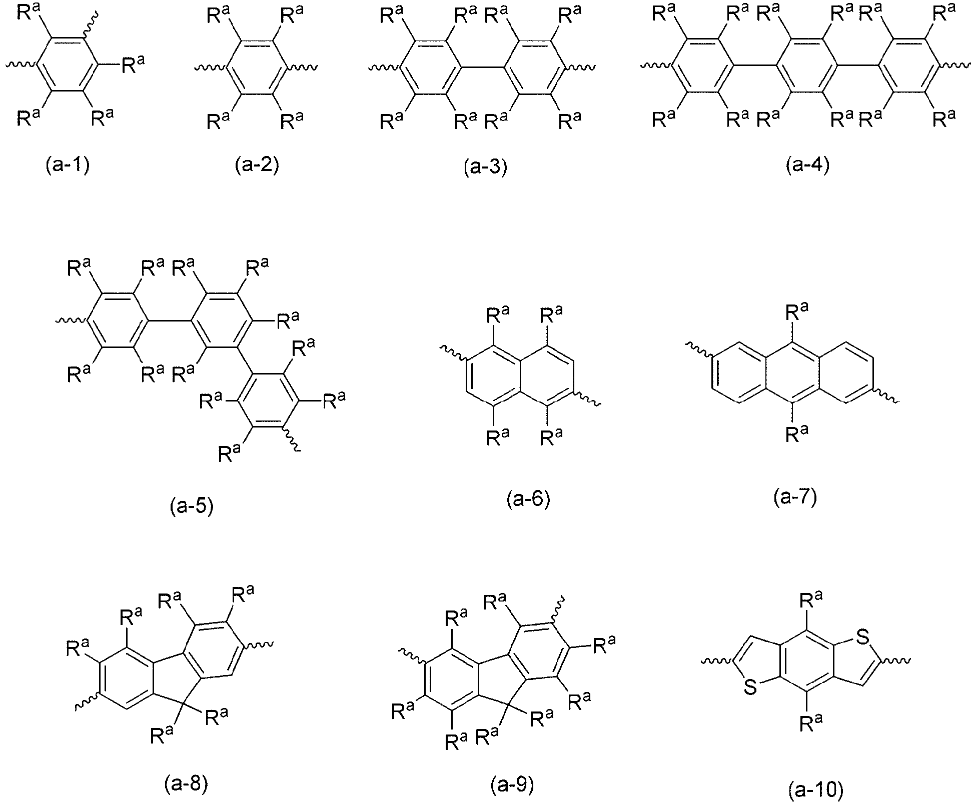

Note that R^{a} each independently represents a hydrogen atom, an ionic group, or a substituent having no ionic group, and a plurality of R^{a} may be identical to each other or different from each other. Further, at least one of R^{a} is an ionic group.

Note that a wavy line represents a bonding hand which bonds to Ar².

Examples of the aromatic ring constituting the principal chain of Ar² include aromatic rings and the like similar to those of Ar¹ and groups linked through spiro atoms. Further, the aromatic ring in Ar² may have a substituent other than the anion exchange groups. Other substituents include those similar to substituents other than the ionic group in Ar¹.

Examples of groups in which two or more aromatic rings in Ar² are connected through spiro atoms include a group represented by the below-shown Formula (c1). Further, examples of groups in which two or more aromatic rings are connected through a single bond include groups represented by the below-shown Formulae (c2) to (c4). Note that a wavy line represents a bonding hand with Ar¹. Ar² preferably does not contain a spiro atom in view of the filling property of the polymer into the porous base material.

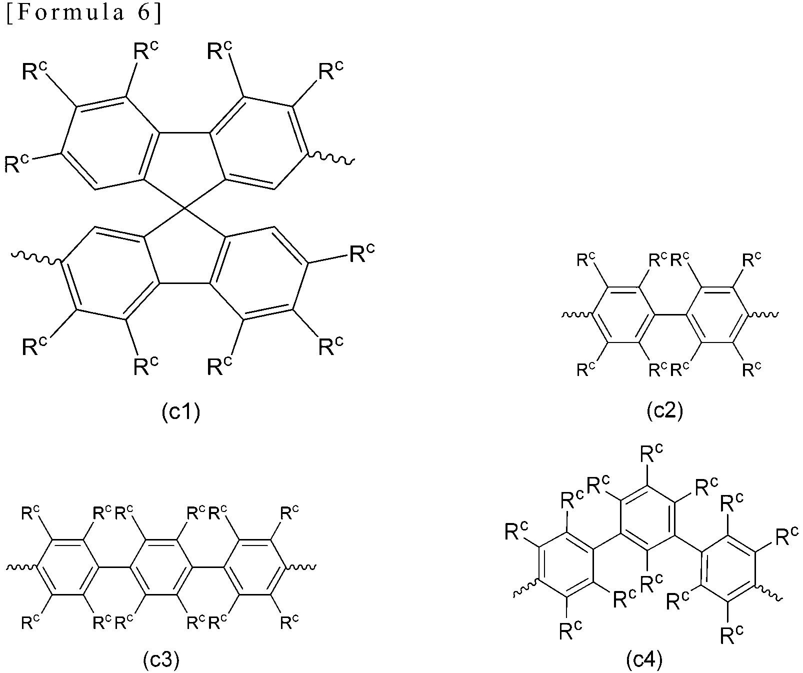

Note that R^{C} each independently represents a hydrogen atom, a halogeno group, or an organic group. Note that a wavy line represents a bonding hand which bonds to Ar¹. Examples of the organic group include an alkyl group which has a carbon number of 1 to 20 and may have a substituent, a phenyl group which may have a substituent, a halogeno group, and the like. Specifically, examples include substituents similar to those other than the ionic group in Ar¹.

The weight-average molecular weight of the hydrocarbon-based polymer (a) can be adjusted as appropriate in view of the chemical durability and the ease of filling into pores, and is, for example, in a range of 10,000 to 1,000,000. In view of the chemical durability, it is preferably 30,000 or larger, and more preferably 100,000 or larger. In particular, in the case where the porous base material is a polyolefin-based porous base material, the hydrocarbon-based polymer (a) can be easily filled into pores even when its weight-average molecular weight is 100,000 or larger. Note that the weight-average molecular weight is a polystyrene-converted numerical value measured by GPC (Gel Permeation Chromatography).

Note that the hydrocarbon-based polymer (a) may consist solely of a constituent unit represented by General Formula (1) (also referred to as a constituent unit (1)), or may have other constituent units. Examples of other constituent units include a structure in which no anion exchange group is introduced into Ar¹ of the constituent unit (1). Further, the hydrocarbon-based polymer (a) may include other structures that could be generated in the synthesis.

The hydrocarbon-based polymer (a) is preferably one of the below-shown polymers (A1) to (A4), more preferably the polymer (A2), the polymer (A3), or the polymer (A4), still more preferably the polymer (A2) or the polymer (A3), and particularly preferably the polymer (A3) in view of the chemical durability, the mechanical strength, and the suppression of the gas permeation. These polymers will be described hereinafter in detail.

### - Polymer (A1)

The polymer (A1) has a repetitive unit represented by below-shown General Formula (1-1).

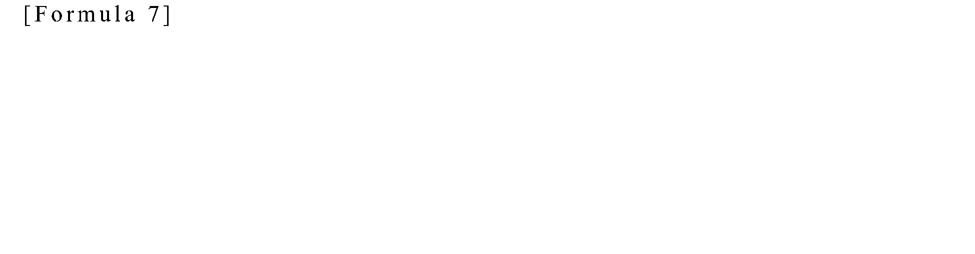

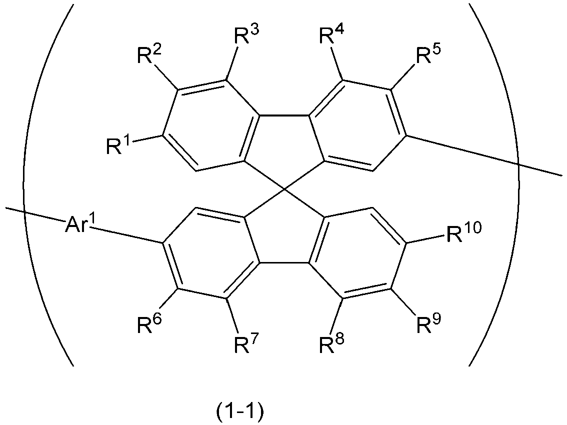

Note that R¹ to R¹⁰ each independently represent a hydrogen atom, an alkyl group having a carbon number of 1 to 4, or a phenyl group. Further, Ar¹ is similar to that in the above-shown Formula 1, and its preferred form is also similar to that in the above-shown Formula (1).

Examples of alkyl groups having a carbon number of 1 to 4 in R¹ to R¹⁰ include a methyl group, an ethyl group, a propyl group, a tert-butyl group, and the like. Regarding the polymer (A1), in order to improve the solubility, at least one of R¹ and R¹⁰ is preferably an alkyl group. More preferably, R¹ and R¹⁰ are alkyl groups, and still more preferably, R¹ and R¹⁰ are tert-butyl groups. Having a bulky substituent in at least one of R¹ and R¹⁰, the aggregation of polymers due to π-π stacking is suppressed, so that the solubility into the solvent improves. Meanwhile, R¹ to R⁸ are preferably each independently a hydrogen atom or a methyl group, and more preferably a hydrogen atom.

The polymer (A1) has a structure in which Ar¹ having an anion exchange group and a spirobifluorene skeleton are alternately repeated. In this polymer (A1), each of the elements constituting the principal chain skeleton belongs to an aromatic ring or is a spiro atom having no hydrogen atom. Further, since the principal chain skeleton does not have an ether bond, the decomposition in the presence of alkalis or radicals is suppressed and the chemical durability is excellent. Further, the spirobifluorene skeleton has a structure in which two fluorenes are twisted at almost right angles through a spiro atom, and since this fluorene skeleton constitutes the principal chain, the entire principal chain has a large number of bends. As a result, the planarity of the principal chain decreases; π-π stacking is inhibited; the solubility into the solvent is excellent; and the handleability when being filled into the porous base material is excellent.

The method for synthesizing the polymer (A1) is not limited to any particular methods. As a suitable example, there is Scheme A1 shown below.

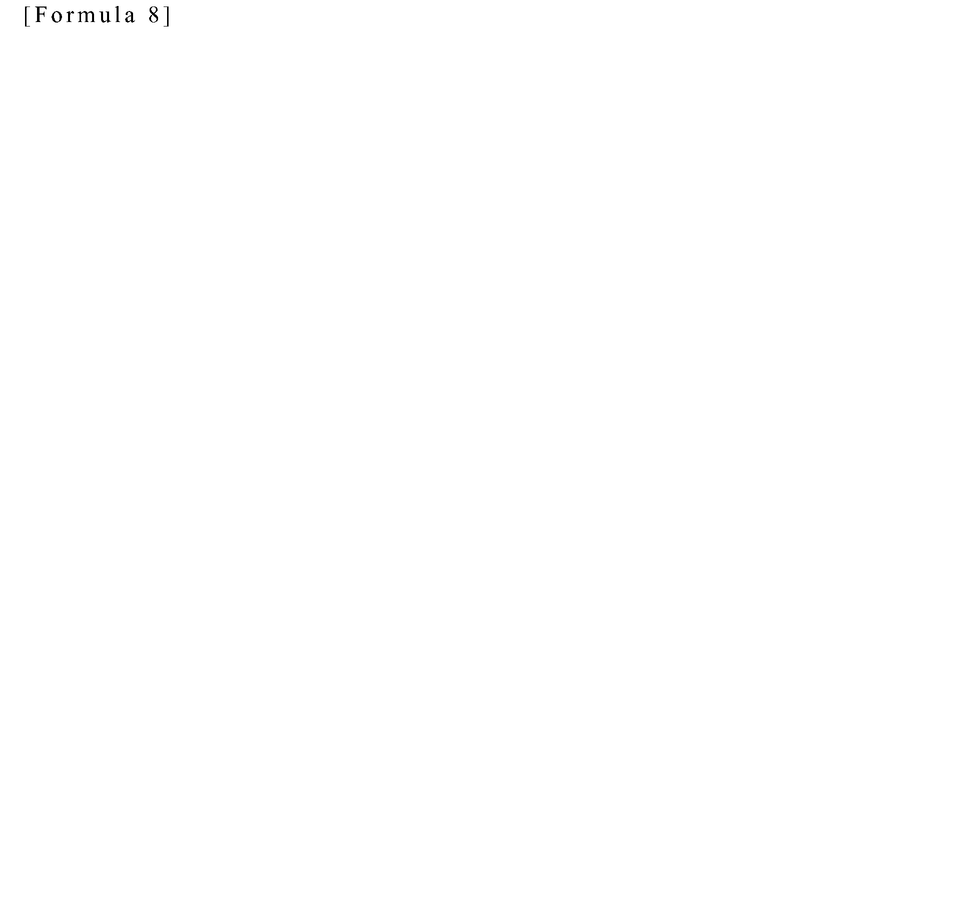

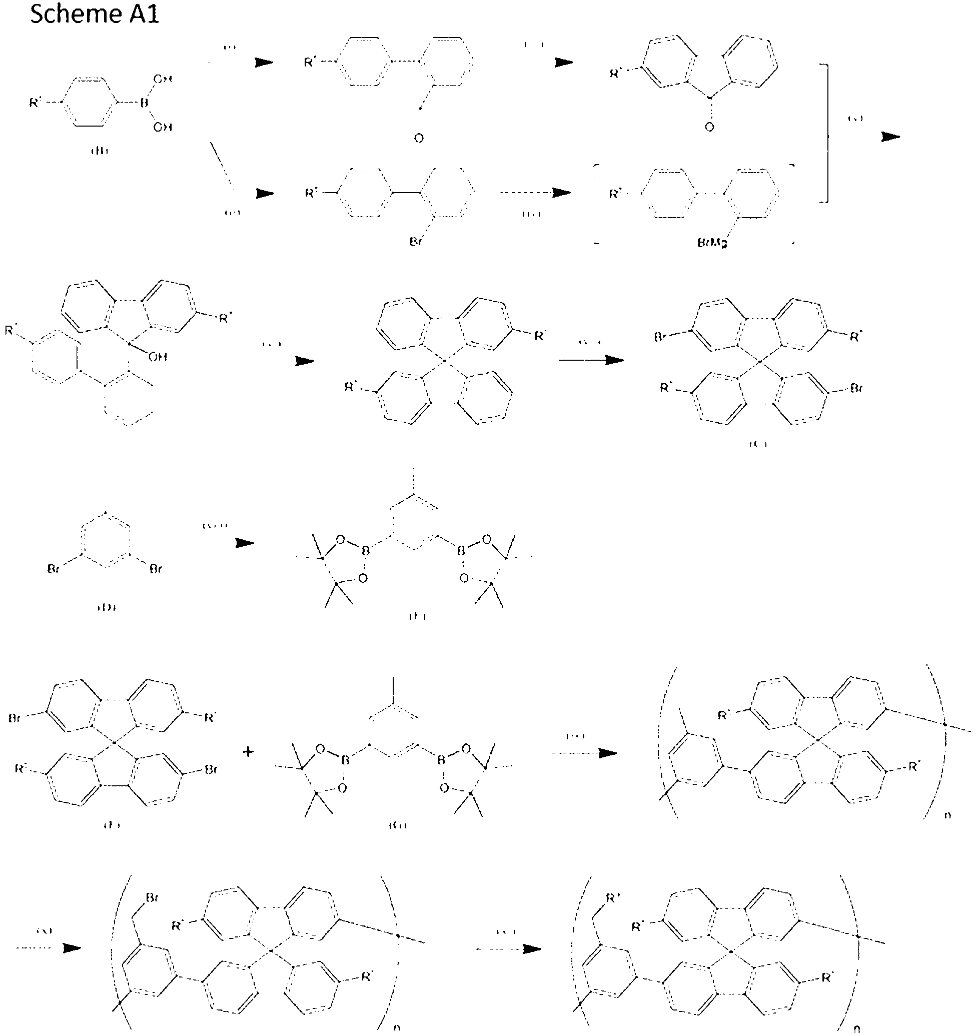

In Scheme A1, R^{a} represents an anion exchange group, and R^{b} represents a substituent corresponding to R¹ and R¹⁰ in General Formula (1-1).

In the above-described example of Scheme A1, a compound (C) having a brominated spirobifluorene skeleton is synthesized from a compound (B) having a desired substituent R^{b} (Steps (i) to (vii)). Separately from the aforementioned synthesis, a compound (E), which will become a precursor of Ar¹ in General Formula (1-1), is synthesized by making bis (pinacolate) diborane react with a bromide (D) having a desired aromatic ring (benzene ring in the example of Scheme A1) (Step (viii)). A polymer represented by General Formula (1-1) is obtained by, after polymerizing the compounds (C) and (E), introducing a desired anion exchange group thereinto (Step (ix) to Step (xi)). Note that the conditions for the above-described reaction in each of the above-described steps may be determined by referring to known reactions.

### - Polymer (A2)

The polymer (A2) has a repetitive unit represented by General Formula (1-2).

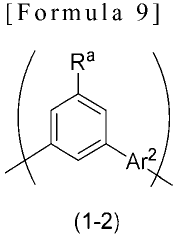

Note that R^{a} is a group having an anion exchange group, and Ar² is similar to that in General Formula (1).

The polymer (A2) is a polymer having two or more of constituent units (1-2) described above, and its principal chain is an entirely aromatic compound. Since the polymer (A2) has the above-described structure, it has excellent durability against alkalis, radicals, and the like.

In particular, Ar² in the polymer (A2) is preferably a phenylene group, a biphenylene group, or a terphenylene group, and more preferably a p-phenylene group (below-shown Formula (Ar-1)), a 4,4'-biphenylene group (below-shown Formula (Ar-2)), or a 4,4"-terphenylene group (below-shown Formula (Ar-3)).

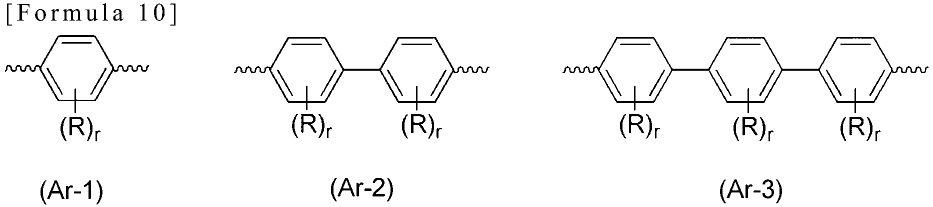

Note that R is a substituent that Ar² may have; r is an integer of 0 to 4; and a plurality of R and r may be identical to each other or different from each other.

In the case where Ar² is a p-phenylene group, 4,4'-biphenylene group, or 4,4''-terphenylene group, the principal chain skeleton of polymer (A2) tends to have a zigzag arrangement as shown in the below-shown formula. The below-shown formula shows, as a typical example, a case where Ar² is a p-phenylene group, but the same applies to cases where it is 4,4'-biphenylene group or 4,4''-terphenylene group. As shown in the below-shown formula, the principal chain skeleton of polymer (A2) tends to have a zigzag arrangement, and each R^{a} tends to be located outside the bend of the skeleton. Therefore, the aggregation within the molecule due to bends or the like of the principal chain is suppressed. As a result, the polymer becomes one that can form an electrolyte membrane having excellent ionic conductivity.

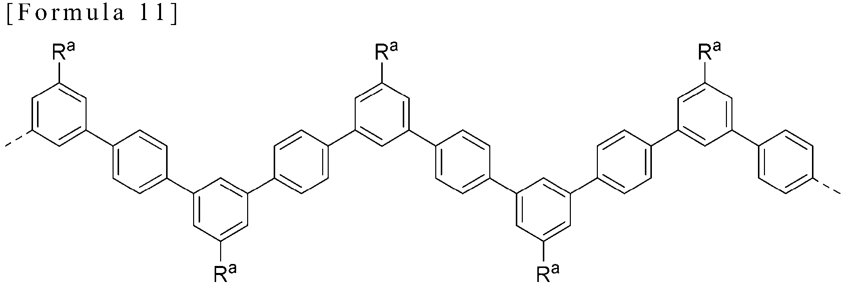

In particular, the group R^{a} having an anion exchange group in the polymer (A2) is preferably a group represented by the below-shown Formula (R^{a}-1).

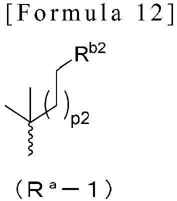

Note that R^{b2} is an anion exchange group, and p2 is an integer from 1 to 20. Further, a wavy line represents a bonding hand with a benzene ring.

In the group represented by the above-shown Formula (R^{a}-1), a carbon atom adjacent to the benzene ring constituting the principal chain is a quaternary carbon. Therefore, π-π stacking between polymers (A2) is suppressed. As a result, the aggregation of polymer (A2) is suppressed, and the polymer (A2) is easily dissolved in the solvent. Further, the handling property during the formation of the membrane and the like is excellent.

p2 represents {(Number of Carbons from R^{b2} to Quaternary Carbon)-1}, and it may be adjusted as appropriate in a range from 1 to 20. In particular, it is preferably 1 to 15, more preferably 1 to 12, and still more preferably 1 to 6.

The method for synthesizing the polymer (A2) is not limited to any particular methods. As a suitable example, there is Scheme A2 shown below.

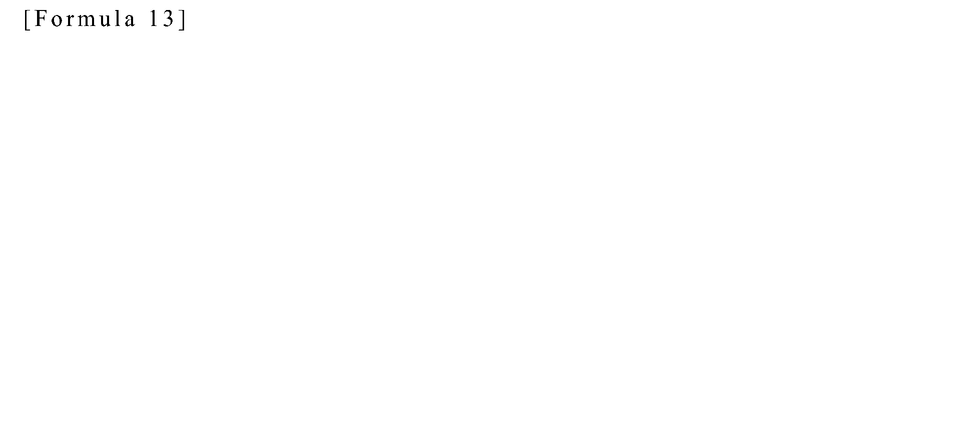

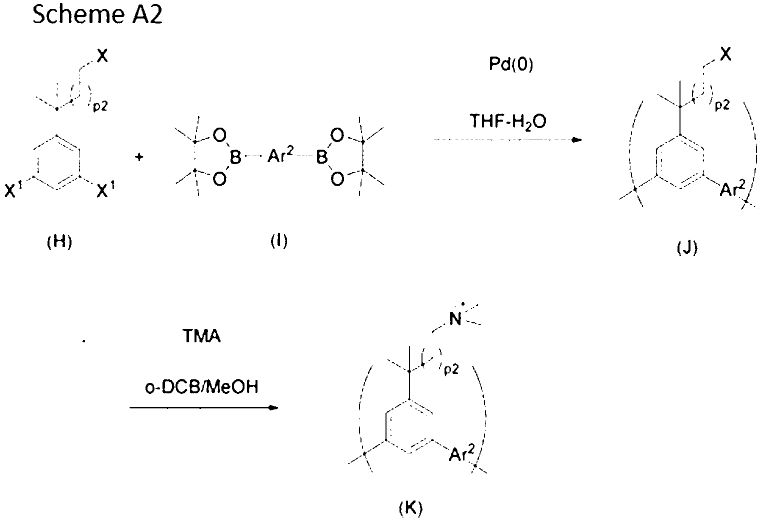

Note that X and X¹ represent halogen atoms, and Ar² and p2 are as described above. The halogen atom of X¹ is preferably Br.

In an example of the aforementioned Scheme A2, first, a compound (H) and a compound (I) having a desired Ar² are prepared, and then a polymer having a constituent unit represented by Formula (J) is obtained by polymerizing the compounds (H) and (I). Next, the polymer (A2) is obtained by introducing a desired anion exchange group into the polymer (J). Although quaternary ammonium is introduced in the above-described Scheme A2, other ionic functional groups can be introduced in a similar manner. Note that the conditions for the reaction in each of the above-described steps may be determined based on known reactions.

### - Polymer (A3)

In the polymer (A3), Ar² has a partial structure represented by the below-shown Formula (2) at each of both ends in the repetitive unit represented by General Formula (1). In other words, this Ar² is a divalent group containing an aromatic ring having a fluoro group (-F) at an α-position of a carbon atom at each of the ends. Note that the ends of Ar² are carbon atoms bonded to Ar¹. Note that a wavy line represents a bonding hand with Ar¹, and a dotted line indicates that a part of the aromatic ring is omitted.

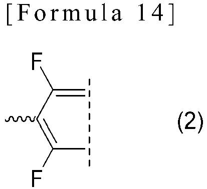

The polymer (A3) has a structure in which Ar¹ having an anion exchange group and Ar² having a partial structure (2) containing a fluoro group (-F) are alternately arranged. Since each of Ar¹ and Ar², which constitute the principal chain, has an aromatic group, it has excellent chemical durability against alkalis, radicals, and the like. Further, in the polymer (A3), Ar¹ having an ionic group connected to the end of a side chain through an alkyl chain and Ar² having no ionic group are alternately arranged. Owing to this structure, it has excellent solubility into the solvent and excellent ionic conductivity. Further, the reactivity between a compound having a partial structure (2) and a compound represented by Formula (4) (which will be described later) is high, so that a polymer having a higher molecular weight can be manufactured. By using a polymer having a high molecular weight, it is possible to form a membrane having more excellent durability.

For example, Ar² may have two partial structures (2) in one ring structure (e.g., benzene ring) as shown in Formula (b-1) shown later, or one C-F bond may constitute two partial structures (2) as shown in Formula (b-2) shown later. Further, in the case of the aforementioned chain polycyclic hydrocarbon, each of two ring structures of the chain polycyclic hydrocarbon may have one partial structure (2), and these rings may be connected directly or through the above-described linking group. Further, one of a plurality of ring structures may have two partial structures (2). Ar² in the polymer (A3) preferably have no spiro atom.

In the polymer (A3), the above-described Ar² is preferably at least one type selected from the below-shown Formulae (d1) to (d9) because it is possible to form an electrolyte membrane having excellent ionic conductivity, excellent membrane-forming property, excellent chemical durability, and excellent membrane strength. Note that a wavy line represents a bonding hand with Ar¹.

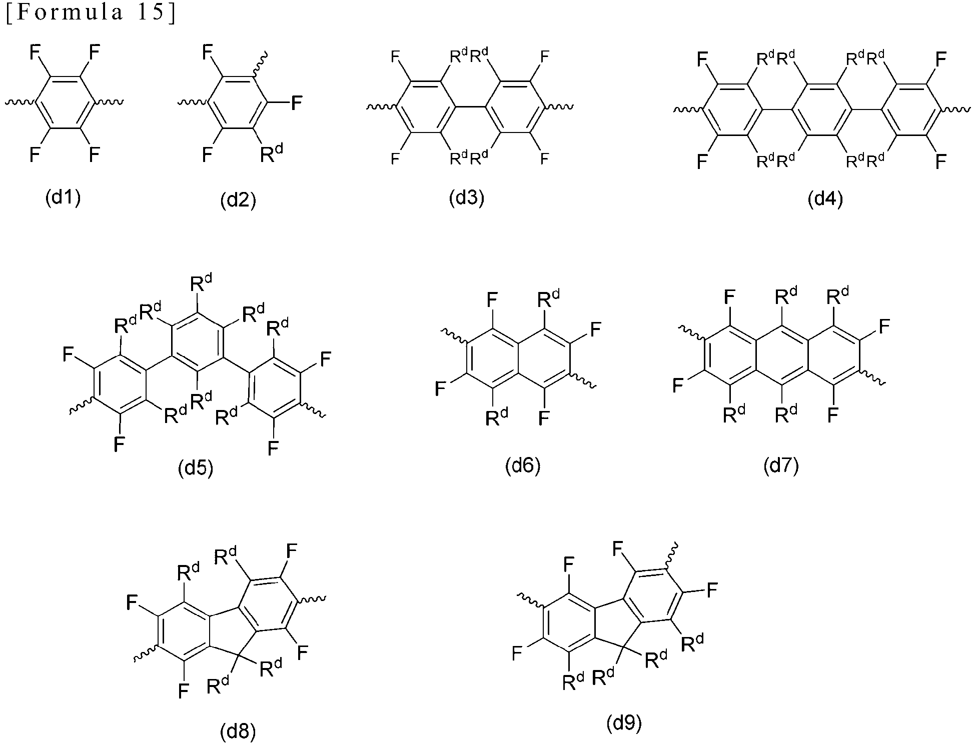

Note that R^{d} each independently represents a hydrogen atom, a halogeno group, or an organic group.

Examples of the halogeno group in the aforementioned R^{d} include a fluoro group, a chloro group, a bromo group, and an iodine group, and in particular, a fluoro group is preferred.

Further, examples of the organic group in the aforementioned R^{d} include a linear or branched alkyl group that has a carbon number of 1 to 20 (not including carbons of the substituent) and may have a substituent (e.g., a halogeno group).

In order to make the manufacturing easier, the aforementioned Ar² may be one of the below-shown Formulae (d10) to (d14). Note that a wavy line represents a bonding hand with Ar¹.

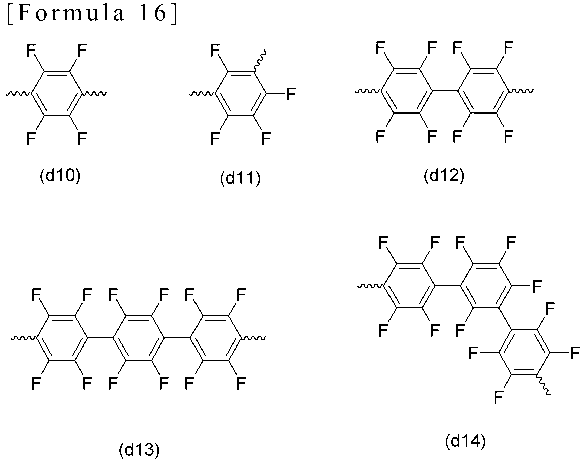

The method for synthesizing the polymer (A3) is not limited to any particular methods. As a suitable example, there is Scheme A3 shown below.

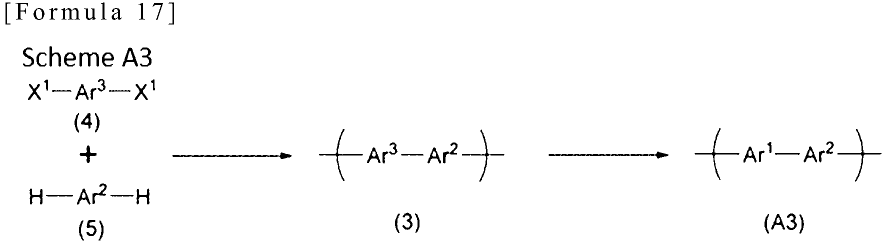

Note that X¹ each independently represents Br or I; Ar³ is an aromatic group having a functional group selected from a halogeno group, a sulfonic acid ester group, a phosphate ester group, a carboxylic acid ester group, an imidazole group, and an amino group; and Ar² is similar to that in the polymer (A3).

Because of the excellent reactivity between X¹ of the compound (4) and a hydrogen atom of the below-shown partial structure (5a) of Ar² of the compound (5), an ion-conductive polymer having a high molecular weight (e.g., a weight average molecular weight of 30,000 or larger, preferably 100,000 or larger) can be synthesized relatively easily.

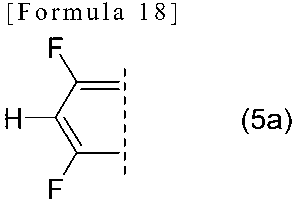

In the aforementioned Scheme A3, first, a compound (4) having desired Ar³ and a compound (5) having desired Ar² are prepared. Then, a polymer having constituent unit (3) is obtained by making these compounds react with each other in the solvent in the presence of, for example, a Pd complex, ligand, carboxylic acid (RCO₂H), and a base at 80 to 140°C for 1 to 48 hours.

Next, the polymer (A3) is obtained by introducing a desired ionic group into the polymer having the constituent unit (3). As described above, the polymer (A3) can be easily manufactured through very few synthesizing steps by using the compounds (4) and (5) as starting materials.

### - Polymer (A4)

The polymer (A4) has a repetitive unit represented by the below-shown General Formula (1-4).

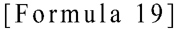

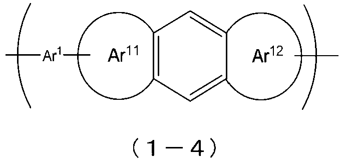

Note that rings Ar¹¹ and Ar¹² are rings that will be condensed to a benzene ring, and are condensed rings which have an aromatic property as a whole and in which three or more rings are condensed. Further, Ar¹ is similar to that in General Formula (1).

The polymer (A4) has a structure in which Ar¹ having an anion exchange group and Ar² composed of condensed rings in which three or more rings are condensed are alternately repeated. In general, a polymer containing a large number of ionic groups tends to swell. However, in the polymer (A4), Ar¹ and Ar² are alternately repeated, and condensed rings in which three or more rings are condensed are π-π stacked, so that it has excellent swelling resistance.

Each of the rings Ar¹¹ and Ar¹² is an aromatic ring that may contain a heteroatom. Examples of such heteroatoms include N (nitrogen atom), O (oxygen atom), and S (sulfur atom). The condensed ring including the rings Ar¹¹ and Ar¹² preferably is a condensed rings in which three or more rings are condensed in view of the swelling resistance. On the other hand, in order to increase the ion exchange capacity of the polymer (A4), it is preferably a condensed ring of which the number of condensed rings is five or smaller, and more preferably a condensed ring of which the number of condensed rings is four or smaller.

Preferred specific examples of this condensed ring include those shown below. Note that a wavy line represents a bonding hand with Ar¹. Further, the hydrogen atom may be substituted with a group having no anion exchange group.

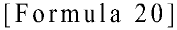

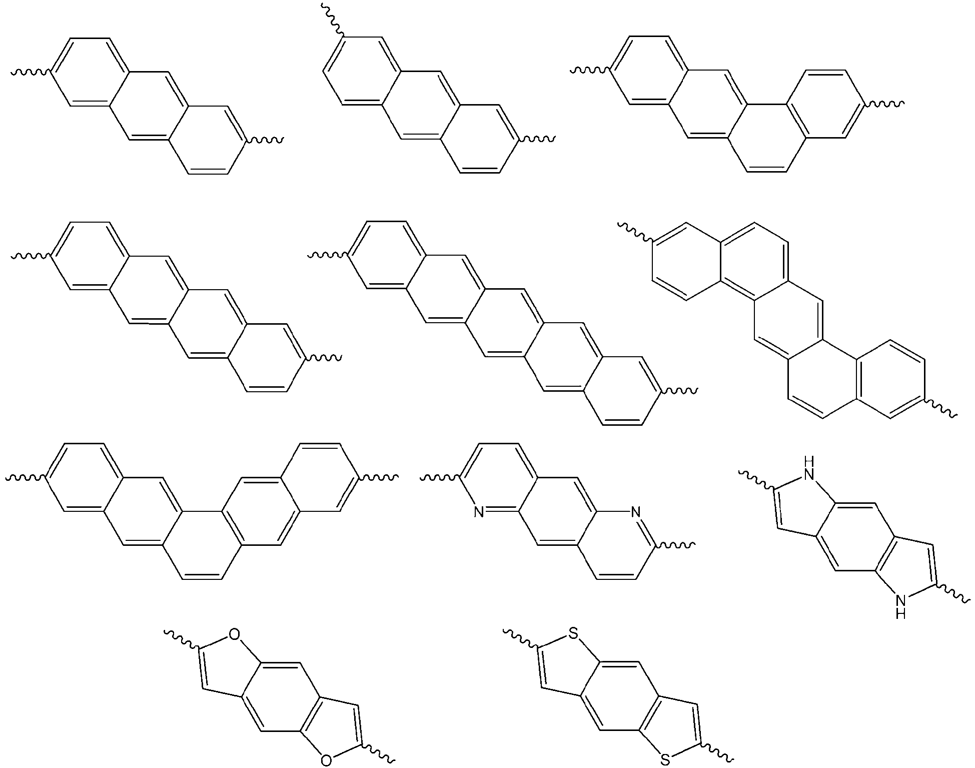

The polymer (A4) is preferably synthesized by preparing a precursor (1-5) having a repetitive unit represented by the below-shown General Formula (1-5), and eliminating a substituent (TL) after it is filled into the porous base material.

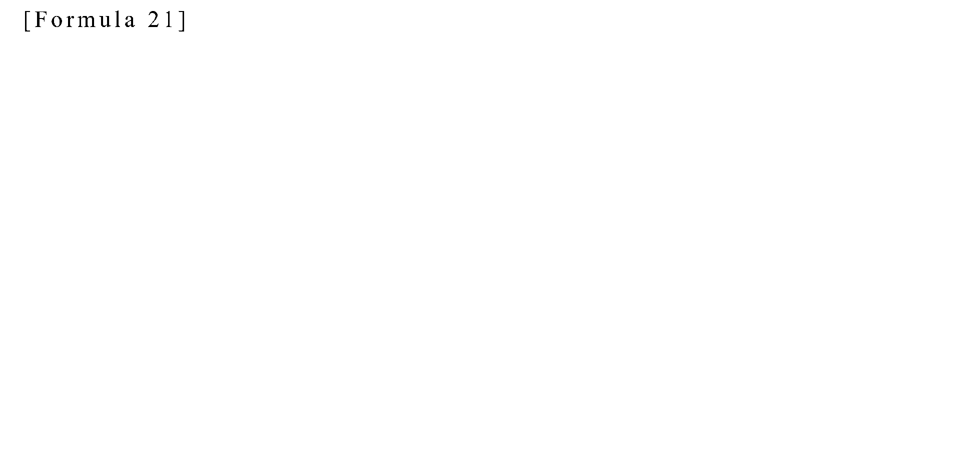

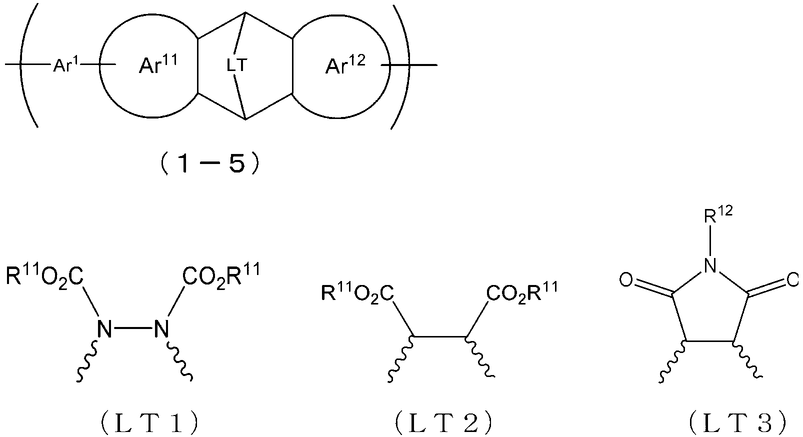

Note that LT is a group represented by General Formulae (LT1) to (LT3); R¹¹ is each independently an alkyl group having a carbon number of 1 to 6; R¹² is an alkyl group having a carbon number of 1 to 6 or a phenyl group; and Ar¹, Ar¹¹ and Ar¹² are similar to those in the above-shown General Formula (1-4).

The alkyl group having a carbon number of 1 to 6 in R¹¹ and R¹² may be either an alkyl group having a straight chain or an alkyl group having a branch. Its specific examples include a methyl group, an ethyl group, a propyl group, an n-butyl group, a tert-butyl group, a pentyl group, and a hexyl group.

As described above, the polymer (A4) has excellent swelling resistance. Therefore, there is a problem that it is hardly dissolved in various organic solvents and its handling property during the processing is poor. In the aforementioned precursor, a substituent (TL) represented by the above-shown General Formula (LT1) to (LT3), which is bulky and can be eliminated relatively easily by the effect of heat or light, is introduced at a part corresponding to the condensed ring of the polymer (A4). In the precursor (1-5), π-π stacking at the hydrophobic part is inhibited by this substituent, so that the solubility in various organic solvents is improved. Therefore, the aforementioned precursor has an excellent handling property and is easily filled into the porous base material. Note that the substituent (TL) can be removed by heating or light irradiation.

The method for synthesizing the precursor is not limited to any particular methods. As a suitable example, there is Scheme A4 shown below.

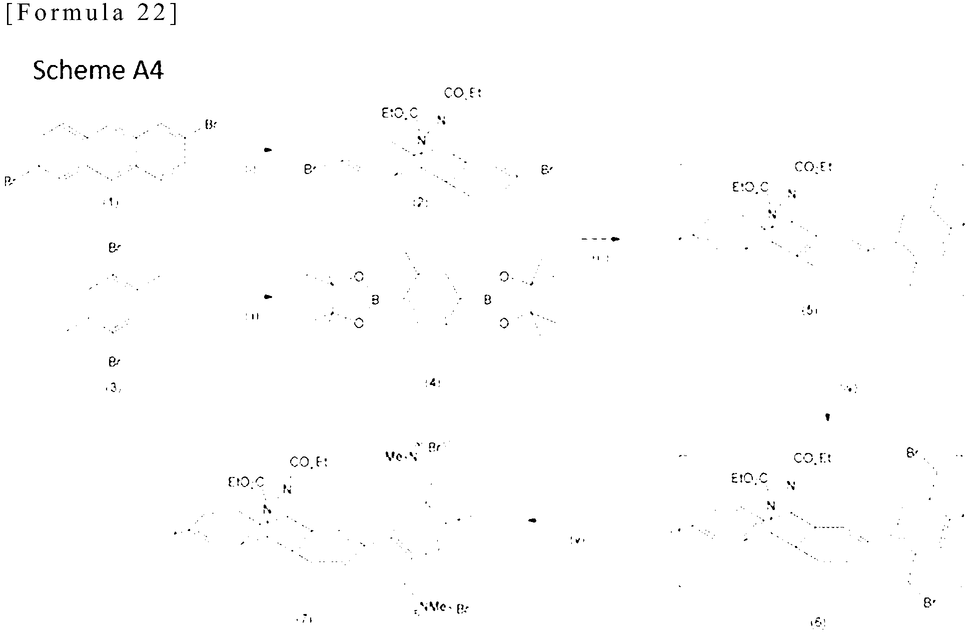

An example of each step of the aforementioned Scheme A4 will be described hereinafter.

Step (i): A toluene solution of the aforementioned compound (1) is prepared, and then the aforementioned compound (2) is obtained by adding diethyl azodicarboxylate (DEAD) to the toluene solution and thereby heat and refluxing it.

Step (ii): Separately from the above-described step, a N,N-dimethylformamide (DMF) solution of the aforementioned compound (3) is prepared, and then the aforementioned compound (4) is obtained by adding bis(pinacolate)diborane, potassium acetate (KOAc), and [1,1'-bis(diphenylphosphino)ferrocene]palladium (II) dichloride (Pd(dppf)Cl₂) to the solution, and heating it to 90°C.

Step (iii): The aforementioned compound (5) is obtained by adding tripotassium phosphate (K₃PO₄) and tetrakis(triphenylphosphine)palladium(Pd(PPH₃)₄) to the toluene solution of the aforementioned obtained Compounds (2) and (4), and heating it to 100°C and thereby polymerizing them.

Step (iv): The aforementioned compound (6) is obtained by adding and mixing the obtained compound (5), N-bromosuccinimide (NBS), and azobisisobutyronitrile (AIBN) in chlorobenzene, and heating it at 110°C.

Step (v): A precursor represented by the above-shown Chemical Formula (7) is obtained by heating the obtained compound (6) at 50°C in a DMF/THF (tetrahydrofuran) mixed solvent.

### (Other Hydrocarbon-based Polymer (a))

Other suitable specific examples of the hydrocarbon-based polymer (a) include those shown below. They can be synthesized by known methods.

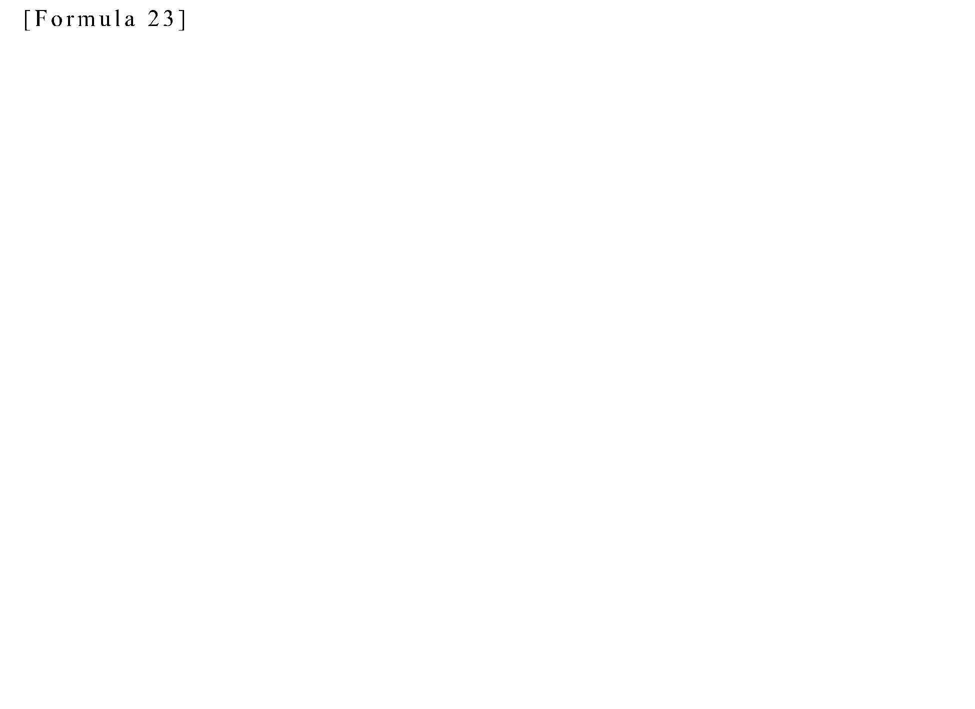

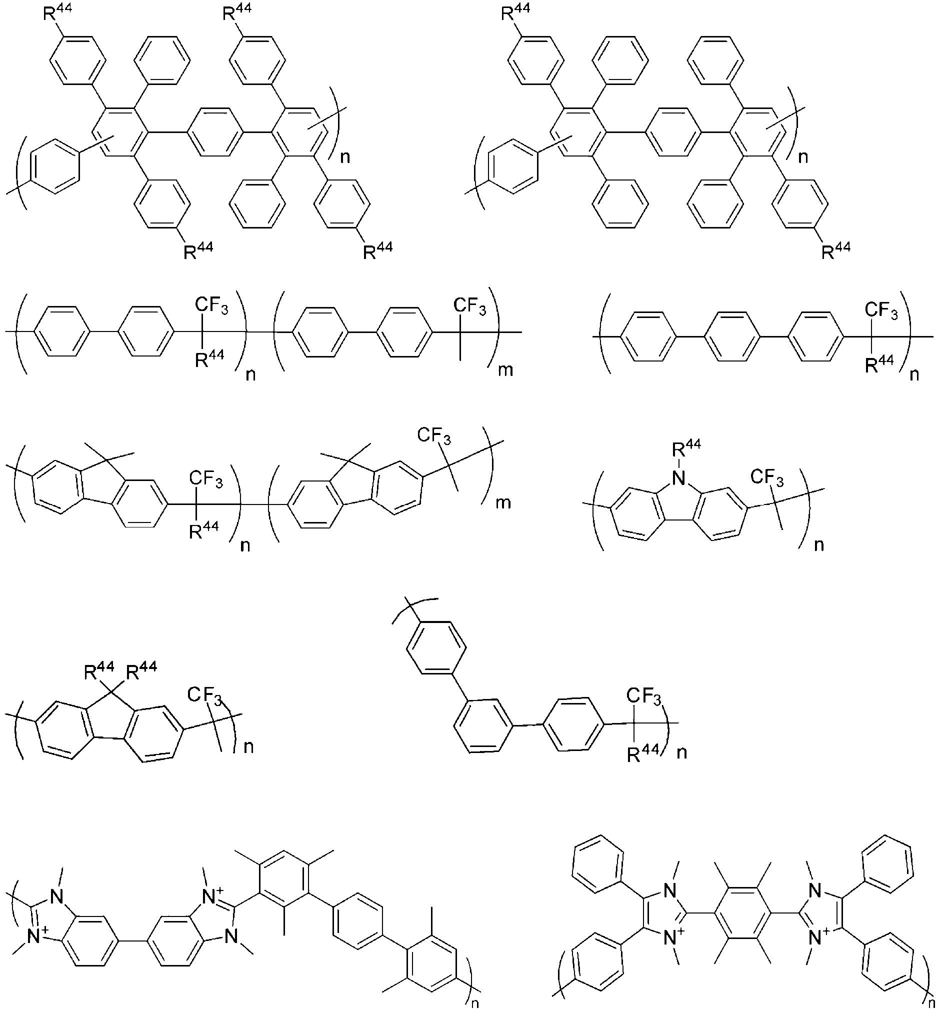

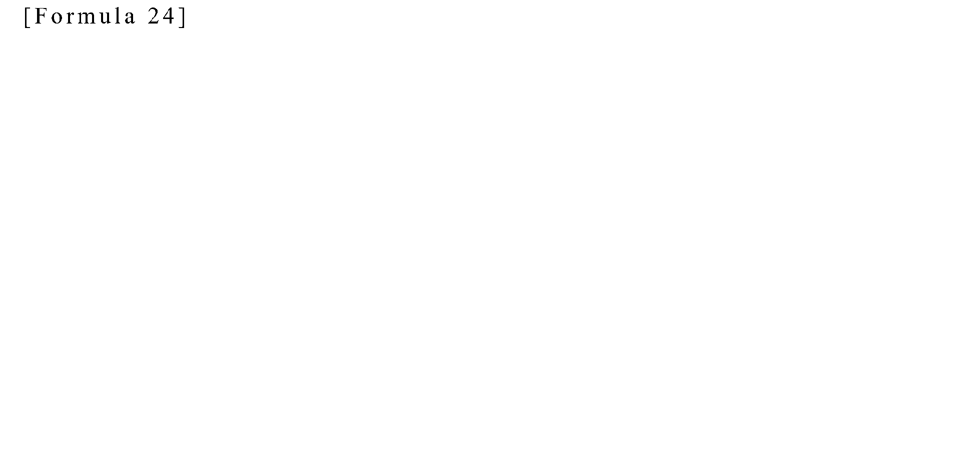

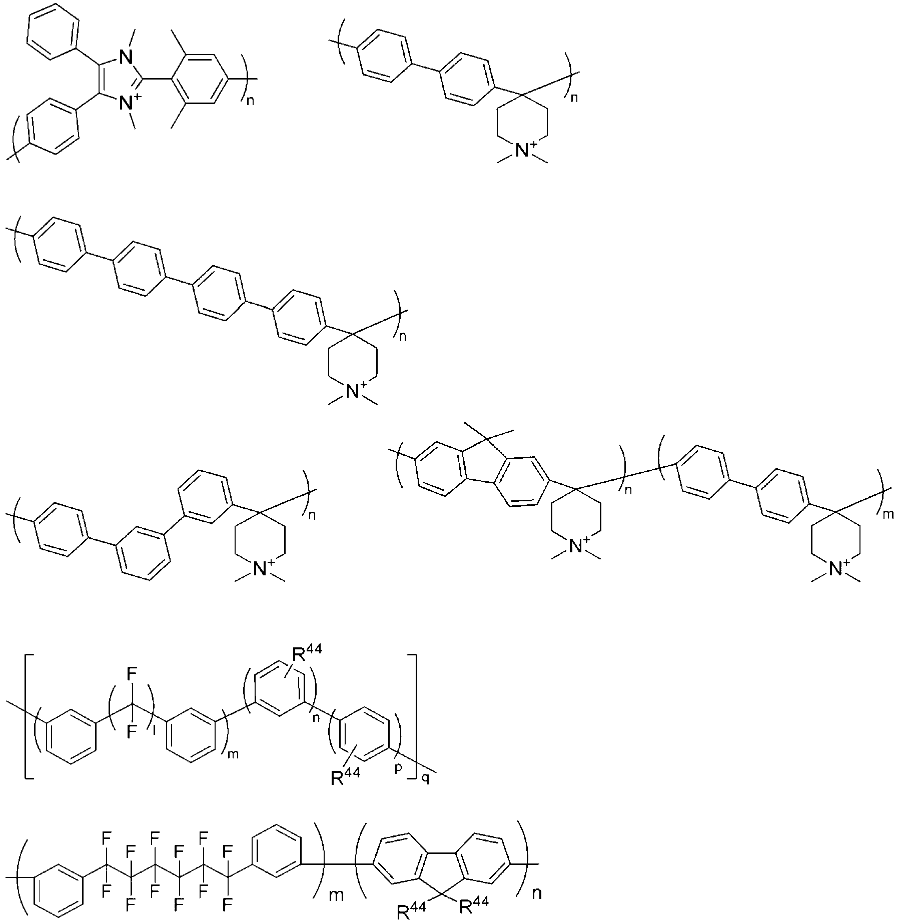

Note that R⁴⁴ is a group having an ionic group, and m, n, l, p, and q each independently represent an integer of 1 or larger.

The layer A containing the hydrocarbon-based polymer (a) may be a cast membrane formed by using the hydrocarbon-based polymer (a) as coating, or a pore-filling membrane in which the hydrocarbon-based polymer (a) is filled in pores of the porous base material. By forming a membrane according to this embodiment as such a pore-filling membrane, the mechanical strength of the membrane is improved.

### (Porous Base Material)

The porous base material used for the pore-filling membrane is a base material with pores in which the hydrocarbon-based polymer (a) can be held. Preferably, at least some of the pores of the porous base material form through holes in order to improve the ionic conductivity.

In order to impart a mechanical strength, the form of the base material is preferably a nonwoven fabric or a porous film, and more preferably a film in the form of a porous film.

In order to achieve both the mechanical strength and the ionic conductivity, the porosity (= volume of voids/bulk volume × 100 (%)) of the porous base material is preferably 30 to 95%, more preferably 40 to 80%, and still more preferably 45 to 70%.

Further, in view of the fact that the hydrocarbon-based polymer (a) is filled into and held in the porous base material and in view of the mechanical strength, the average diameter of pores of the porous base material is preferably 10 to 10,000 nm, and more preferably 10 to 1,000 nm.

The material of the porous base material is preferably a polyolefin-based porous base material in view of the chemical durability, especially the stability in alkalis. This polyolefin may be fluorine-substituted perfluoropolyolefin. The use of a polyolefin-based porous base material has an advantage that polyarylene polymers, especially high molecular weight polyarylene polymers having a weight-average molecular weight of 100,000 or larger, can be easily filled thereinto. The polyolefin-based porous base material is preferably, in particular, a polyethylene porous base material, a polypropylene porous base material, or a polytetrafluoroethylene porous base material in view of the mechanical strength and the chemical resistance, and is preferably a polytetrafluoroethylene porous base material or an ultra-high molecular weight polyethylene (e.g., a weight-average molecular weight of 1,000,000 or larger) porous base material in view of the durability.

As an example, the pore-filling membrane can be manufactured by adding a hydrocarbon-based polymer (a) to a porous base material and drying it. Examples of the method for adding a hydrocarbon-based polymer (a) to a porous base material include a method in which a solution of a hydrocarbon-based polymer (a) is prepared and then it is filled into the porous base material by a dipping method, a spraying method, a spin coating method, a bar code method, or the like. A pore-filling membrane can be obtained by impregnating a porous base material with a solution of a hydrocarbon-based polymer (a) and then drying it. Note that whether the porous base material has been filled with the hydrocarbon-based polymer (a) is checked, for example, by a Raman analysis.

### <Layer B1 and Layer B2>

Each of the layers B1 and B2 (hereinafter, they are also collectively referred to as the "layer(s) B") contains a perfluorocarbon polymer (b) having an ionic group. A perfluoro-carbon polymer is a polymer that has a structure in which all the hydrogen atoms of the hydrocarbon are fluorine-substituted, and has no C-H bond. Since the perfluoro-carbon polymer has no C-H bond, it has excellent radical durability.

A cluster formed in the layer B will be described with reference to Fig. 4. Fig. 4 is a schematic diagram showing an example of a cluster network. In the example shown in Fig. 4, a layer B70 contains a perfluoro-carbon polymer (b) 71 having a sulfonic acid group (-SO₃H) as an ionic group and a cluster 72 formed inside the membrane. The cluster 72 is an ionic cluster which is formed as ionic groups of the perfluoro-carbon polymer (b) 71 gather like a reversed micelle, and it is inferred that a plurality of clusters 72 are connected to one another and thereby form a network inside the membrane. The size d of the cluster is about 1 to 10 nm. Ions and water can move inside this cluster network, and as a result, not only proton conductivity but also anion (OH⁻ion) conductivity can be obtained while the membrane has a sulfonic acid group which is an anionic group.

### (Perfluorocarbon polymer (b))

Since the layer B contains the perfluoro-carbon polymer (b) having an ionic group, the membrane according to this embodiment is excellent in the ionic conductivity and the radical durability. In view of the ionic conductivity, the radical durability, and the membrane-forming property, the perfluoro-carbon polymer (b) is preferably a polymer containing a structure represented by the below-shown Formula (2A), (2B) or (2C), and more preferably a polymer containing a structure represented by the below-shown Formula (2A).

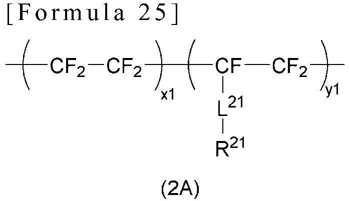

In the formula:
R²¹ is an ionic group,
L²¹ is a divalent linking group, and
x1 and y1 are each independently an integer of 1 or larger.

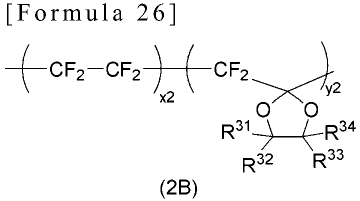

In the formula,
R³¹, R³², R³³ and R³⁴ each independently represent a fluorine atom, a fluoroalkyl group which may have an ether bond (-O-), or -L³¹-R³⁵, but at least one of R³¹ to R³⁴ is -L³¹-R³⁵,
R³⁵ is an ionic group,
L³¹ is a divalent linking group, and
x2 and y2 are each independently an integer of 1 or larger.

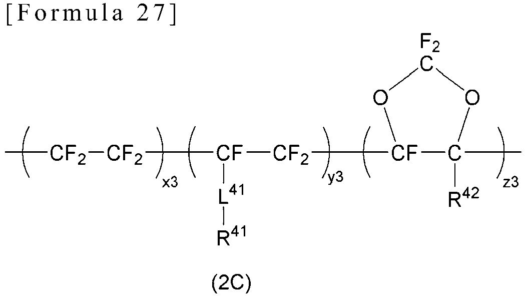

In the formula,
R⁴¹ is an ionic group,
L⁴¹ is a divalent linking group,
R⁴² is t a fluorine atom or a fluoroalkyl group which may have an ether bond (-O-), and
x3, y3 and z3 are each independently an integer of 1 or larger.

In the structures represented by Formulae (2A), (2B) and (2C), the principal chain is a hydrophobic fluoroalkyl chain and has a side chain having an ionic group. By using a polymer having the structure represented by Formulae (2A) to (2C), a membrane having the above-described cluster network can be easily formed.

Note that the bonding order of (CF₂CF₂) and (CF(L²¹R²¹)CF₂) in Formula (2A) is arbitrary, and may be block, alternate, or random. In Formula (2A), x1 and y1 represent the numbers of (CF₂CF₂) and (CF(L²¹R²¹)CF₂), respectively, and x1 and y1 may each independently be an integer of 1 or larger.

The same applies to Formulae (2B) and (2C), and each constituent unit may be block, alternate, or random.

In this embodiment, an ionic group means a group that can be ionized in the presence of water. Examples of ionic groups in R²¹, R³⁵ and R⁴¹ include a sulfonic acid group (-SO₃H group), a phosphoric acid group (-H₂PO₄ group), a carboxylic acid group (-COOH group), an amino group (-NH₃ group), a quaternary amino group (-N(CH₃)₃ group), and the like, and is preferably a sulfonic acid group, a carboxylic acid group, or an amino group, and more preferably a sulfonic acid group. Note that the aforementioned ionic group may have already been ionized, and H of the acidic group may have already been substituted with an alkali metal ion, an alkaline earth metal ion, an ammonium ion, or the like. Further, the amino group may be an ammonium ion or a salt.

When the perfluoro-carbon polymer (b) has a plurality of ionic groups therein, the plurality of ionic groups may be identical to each other or different from each other.

In Formula (2A), L²¹ is a linking group connecting the principal chain with R²¹. The linking group L²¹ is not limited to any particular groups. However, in order to obtain a membrane having a cluster network with ease, the linking group L²¹ is preferably a fluoroalkylene group which may have a substituent and/or an ether bond, and more preferably a group represented by the below-shown Formula (3).

*-(O)ₐ-R²²-** (3)

where,
R²² is a fluoroalkylene group which has a carbon number of 1 to 20 and may have an ether bond (-O-),
a is 0 or 1, and
* represents a bonding hand with the principal chain, and ** represents a bonding hand with R²¹,

When a is 0, the carbon atom of the principal chain is directly bonded to R²². When a is 1, the carbon atom of the principal chain is bonded to R²² through an oxygen atom.

The fluoroalkylene group in R²² may be a straight chain or may have a branch(es). In view of the mechanical strength of the membrane and the ion exchange capacity, the carbon number may be 1 to 20, preferably 1 to 12, more preferably 1 to 6, and still more preferably 1 to 4. Further, in view of the chemical durability of the membrane, the fluoroalkylene group is preferably one with no ether bond.

Specific examples of R²² include -CF₂-, -CF₂CF₂-, - CF(CF₃)CF₂-, -CF₂CF₂CF₂-, -CF₂CF(CF₃)CF₂-, -CF₂CF₂CF₂CF₂-, - CF₂CF(CF₃)CF₂CF₂-, -CF₂CF₂CF₂CF₂CF₂-, -CF₂CF₂CF₂CF₂CF₂CF₂-, - CF₂OCF₂-, -CF(CF₃)OCF₂-, -CF₂CF(CF₃)OCF₂CF₂-, - CF₂CF₂CF₂OCF₂CF₂-, -CF₂CF₂CF₂OCF₂CF₂CF₂-, and the like. In particular, R²² is preferably -CF₂CF₂-, -CF₂CF₂CF₂-, -CF₂CF₂CF₂CF₂-, or -CF₂CF(CF₃)OCF₂CF₂-, and more preferably -CF₂CF₂-, -CF₂CF₂CF₂-or -CF₂CF₂CF₂CF₂-.

When there are a plurality of R²² in a molecule, the plurality of R²² may be identical to each other or different from each other.

In the above-shown Formula (2A), x1 may be an integer of 1 or larger, and is preferably 1 to 80,000, more preferably 1 to 50,000, and still more preferably 2 to 5,000. Further, y1 may be an integer of 1 or larger, and is preferably 1 to 80,000, more preferably 1 to 50,000, and still more preferably 2 to 5,000.

The ratio between x1 to y1 is not limited to any particular values, and the ratio x1:y1 may be adjusted as appropriate in a range of 1:9 to 9:1.

The fluoroalkyl group which may have an ether bond in R³¹ to R³⁴ of Formula (2B) may be a straight chain or may have a branch(es). In view of the mechanical strength of the membrane and the ion exchange capacity, the carbon number may be 1 to 20, preferably 1 to 12, more preferably 1 to 6, and still more preferably 1 to 4.

Specific examples of fluoroalkyl groups which may have an ether bond include -CF₃, -CF₂CF₃, -CF(CF₃)CF₃, -CF₂CF₂CF₃, - CF₂CF(CF₃)CF₃, -CF₂CF₂CF₂CF₃, -CF₂CF(CF₃)CF₂CF₃, - CF₂CF₂CF₂CF₂CF₃, -CF₂CF₂CF₂CF₂CF₂CF₃, -CF₂OCF₃, -CF(CF₃)OCF₃, -CF₂CF(CF₃)OCF₂CF₃, -CF₂CF₂CF₂OCF₂CF₃, -CF₂CF₂CF₂OCF₂CF₂CF₃, -OCF₃, -OCF₂CF₃, -OCF(CF₃)CF₃, -OCF₂CF₂CF₃, -OCF₂CF(CF₃)CF₃, - OCF₂CF₂CF₂CF₃, -OCF₂CF(CF₃)CF₂CF₃, -OCF₂CF₂CF₂CF₂CF₃, - OCF₂CF₂CF₂CF₂CF₂CF₃, -OCF₂OCF₃, -OCF(CF₃)OCF₃, - OCF₂CF(CF₃)OCF₂CF₃, -OCF₂CF₂CF₂OCF₂CF₃, - OCF₂CF₂CF₂OCF₂CF₂CF₃, and the like.

L³¹ in Formula (2B) is a linking group. Its examples include groups and the like similar to those of L²¹ in the above-shown Formula (2A), and it is preferably a group represented by the above-shown Formula (3), and more preferably is -CF₂OCF₂₋.

In Formula (2B), at least one of R³¹ to R³⁴ may be -L³¹ to R³⁵, and one or two of R³¹ to R³⁴ are preferably -L³¹-R³⁵.

x2 in the above-shown Formula (2B) may be an integer of 1 or larger, and is preferably 1 to 80,000, more preferably 1 to 50,000, and still more preferably 2 to 5,000. Further, y2 may be an integer of 1 or larger, and is preferably 1 to 80,000, more preferably 1 to 50,000, and still more preferably 2 to 5,000.

The ratio between x2 and y2 is not limited to any particular values, and the ratio x2: y2 may be adjusted as appropriate in a range of 1:9 to 9:1.

L⁴¹ in the above-shown Formula (2C) is a linking group. Its examples include groups and the like similar to those of L²¹ in the above-shown Formula (2A), and it is preferably a group represented by the above-shown Formula (3), and more preferably is -OCF₂CF₂₋.

Examples of the fluoroalkyl group which may have an ether bond in R⁴² in the above-shown Formula (2C) include groups and the like similar to those in R³¹ to R³⁴ in the above-shown Formula (2B), and is preferably -OCF₃, -OCF₂CF₃, -OCF₂CF₂CF₃, and -OCF₂CF₂CF₂CF₃, and more preferably -OCF₃.

x3 in the above-shown Formula (2C) may be an integer of 1 or larger, and is preferably 1 to 80,000, more preferably 1 to 50,000, and still more preferably 2 to 5,000. y3 may be an integer of 1 or larger, and is preferably 1 to 80,000, more preferably 1 to 50,000, and still more preferably 2 to 5,000. Further, z3 may be an integer of 1 or larger, and is preferably 1 to 80,000, more preferably 1 to 50,000, and still more preferably 2 to 5,000.

The weight-average molecular weight of the above-described perfluoro-carbon polymer (b) having an ionic group can be selected as appropriate in a range of, for example, 10,000 to 1,000,000 as expressed as a polystyrene-converted value.

Further, in order to improve the conductance and the conductivity of the membrane, the ion exchange capacity (EW) of the above-described perfluoro-carbon polymer (b) having an ionic group may be 1,200 g/eq or smaller, and is preferably 1,100 g/eq or smaller, more preferably 1,000 g/eq or smaller, and still more preferably 800 g/eq or smaller. The ion exchange capacity can be adjusted by, for example, the structure of L²¹ in Formula (2A), the ratio between x1 to y1, and the like.

A polymer having the structure represented by Formula (2A) can be synthesized by, for example, copolymerizing tetrafluoroethylene with L²¹R²¹-substituted tetrafluoroethylene. Further, for example, tetrafluoroethylene may be copolymerized with L²¹-SO₂F-substituted tetrafluoroethylene. In this case, a polymer having the structure represented by Formula (2A) can be obtained by replacing SO₂F with SO₃H after the formation of the membrane. Further, by referring to Japanese Unexamined Patent Application Publication No. 2018-095663, for example, it may be synthesized by copolymerizing tetrafluoroethylene with tetrafluoroethylene having a substituent into which an ionic group can be introduced after the polymerization, and then introducing an ionic group thereto. A polymer having the structure represented by Formula (2B) or (2C) can also be synthesized by copolymerization.

Further, a commercially available polymer having the structure represented by Formula (2A) may be used. Examples of commercially available polymers include Nafion (Registered trademark, manufactured by Merch) and Aquivion (Registered trademark, manufactured by Solvay).

### (Radical Scavenger)

The layer B1 and/or the layer B2 may further contain a radical scavenger. As the layer B contains a radical scavenger, the lifetime of peroxy radicals in the membrane is shortened, so that the amount of radicals that reach the layer A is reduced. As a result, the radical durability as a whole membrane is improved.

Examples of radical scavengers include cerium, tungsten, ruthenium, palladium, silver, rhodium, chromium, zirconium, yttrium, manganese, molybdenum, lead, vanadium, titanium, ions thereof, inorganic salts thereof, and oxides thereof. The layer B preferably contains, among them, cerium, chromium, manganese, or vanadium. In order to fix radical scavengers in the layer B with ease, a particulate inorganic salt or a particulate oxide is preferred. In the case where the radical scavenger is particles, the average particle diameter of the particles is preferably 1 nm to 500 nm, more preferably 5 to 250 nm, and still more preferably 10 to 200 nm in view of the membrane-forming property. Note that the particle diameter represents a secondary particle diameter, and the secondary particle diameter is measured by using a dispersion liquid dispersed in water and using a particle size distribution meter such as a laser diffraction/scattering type. In this embodiment, in particular, the radical scavenger is preferably ceria (cerium oxide).

The content ratio of the radical scavenger is not limited to any particular values, but in view of the membrane-forming property of the layer B, the content ratios of the layers B1 and B2 are preferably each independently is 1 to 10 mass%, and more preferably 2 to 5 mass%.

The method for manufacturing a membrane according to the present disclosure is not limited to any particular methods. For example, a membrane containing the hydrocarbon-based polymer (a) and a membrane containing the perfluoro-carbon polymer (b) may be separately formed, and then a laminated structure is obtained by bonding these membranes to each other. Alternatively, for example, a dispersion liquid of the perfluoro-carbon polymer (b) may be applied to and laminated on a membrane containing the hydrocarbon-based polymer (a).

In the case where the layer B contains a radical scavenger, the radical scavenger is added to and mixed with a dispersion liquid of the perfluoro-carbon polymer (b), so that a dispersion liquid in which the radical scavenger is uniformly dispersed is prepared. Then, a membrane may be formed or laminated as described above.

### [Membrane Electrode Assembly and Water Electrolytic Apparatus]

A membrane electrode assembly according to the present invention includes the above-described membrane according to the present invention, an anode catalyst, and a cathode catalyst. Further, a water electrolysis apparatus according to the present invention includes the above-described membrane electrode assembly.

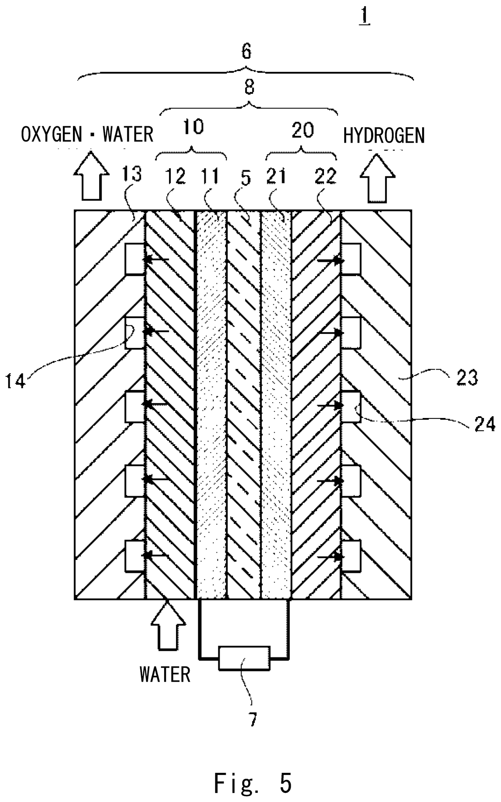

A structure of the membrane electrode assembly and the water electrolysis apparatus will be described with reference to Fig. 5. Fig. 5 is a schematic cross-sectional diagram showing an example of the water electrolysis apparatus. The water electrolysis apparatus 1 shown in the example in Fig. 5 includes a membrane 5, an anode electrode 10 disposed on one of the surfaces of the membrane 5, a cathode electrode 20 disposed on the other surface thereof, a power supply 7 connected to the anode electrode 10 and the cathode electrode 20, and a water supply part for supplying water or an alkaline aqueous solution to the cathode electrode 20. The anode electrode 10 may include at least an anode catalyst 11 and may further include a first diffusion layer 12. Further, the cathode electrode 20 may include at least a cathode catalyst 21 and may further include a second diffusion layer 22. The membrane electrode assembly 8 includes at least the anode catalyst 11 disposed on at least the one surface of the membrane 5 and the cathode catalyst 21 disposed on the other surface thereof. In the example shown in Fig. 5, a cell 6 including separators 13 and 23 disposed on the outer sides of the anode electrode 10 and the cathode electrode 20, respectively, is also formed. The water electrolysis apparatus 1 may include only one cell 6 or may include a stack of a plurality of cells 6. Note that the water supply part may supply water to at least one of the cathode and the anode.

In the case where the above-described water electrolysis apparatus is a solid-state alkaline water electrolysis-type apparatus, for example, when a voltage is applied across both electrodes while water or an alkaline aqueous solution is supplied to the anode electrode 10 side, water is also supplied to the cathode electrode side, and the below-shown reaction occurs on the cathode electrode 20 side, so that a hydrogen gas is generated.

2H₂O + 2e⁻ → 2OH⁻ + H₂

Hydroxide ions (OH⁻) pass through the membrane 5 and move to the anode electrode 10. The below-shown reaction occurs at the anode electrode 10, and an oxygen gas is thereby generated.

2OH⁻ → H₂O + 1/2O₂ + 2e⁻

The generated hydrogen and oxygen are discharged from the cell 6 through gas flow paths 14 and 24 provided in the separators 13 and 23, respectively. The gas flow paths are connected to, for example, storage tanks or the like through gas-liquid separators (not shown), and the hydrogen and oxygen are stored in the storage tanks or the like after water is separated therefrom by the gas-liquid separators.

The water supplied in the water electrolysis apparatus according to this embodiment may be pure water or an alkaline aqueous solution. By using an alkaline aqueous solution, the water electrolysis can be performed at a higher efficiency than when pure water is used. The solute in the alkaline aqueous solution is not limited to any particular solutes, and may be, for example, potassium hydroxide of 1M or lower.

The anode electrode 10 may include at least the anode catalyst 11 and may further include the first diffusion layer 12. The anode catalyst 11 is preferably a metal or a metal alloy. The metal or metal alloy may be selected as appropriate from known ones. Examples of metals or metal alloys include platinum, cobalt, nickel, palladium, iron, silver, gold, copper, iridium, molybdenum, rhodium, chromium, tungsten, manganese, ruthenium, metal compounds thereof, metal oxides thereof, and alloys containing two or more of these metals.

Further, the anode catalyst 11 is preferably a porous material in view of the contact area with water and the diffusion of water and gas. Examples of porous catalysts include an aggregation of metal particles in which particles of the above-described catalyst metal are fused together, a foam of the above-described metal, and a porous material in the form of felt (nonwoven fabric), mesh, or the like formed from wires of a metal or a fibrous metal.

The anode catalyst 11 may be used by coating a surface of the above-described metal with a known electrolyte polymer (ionomer). Meanwhile, in this embodiment, since the ionic conductivity is obtained by having water (solution) move in the membrane electrode assembly 8, the ionic conductivity is excellent even when no electrolyte polymer is used. Further, the activity of the catalyst is further improved by not coating the anode catalyst with any electrolyte polymer.

In particular, the anode catalyst preferably has a nickel foam. Further, in order to achieve both the durability and the high activity, the anode catalyst is preferably (I) a catalyst including a nickel oxide layer containing NiOOH and a layer containing NiFe in this order on the nickel foam (hereinafter referred to as a catalyst (I)), or (II) a catalyst including a phosphide layer containing Ni₂P and Fe₂P on the nickel foam (hereinafter referred to as a catalyst (II)).

### <Catalyst (I)>

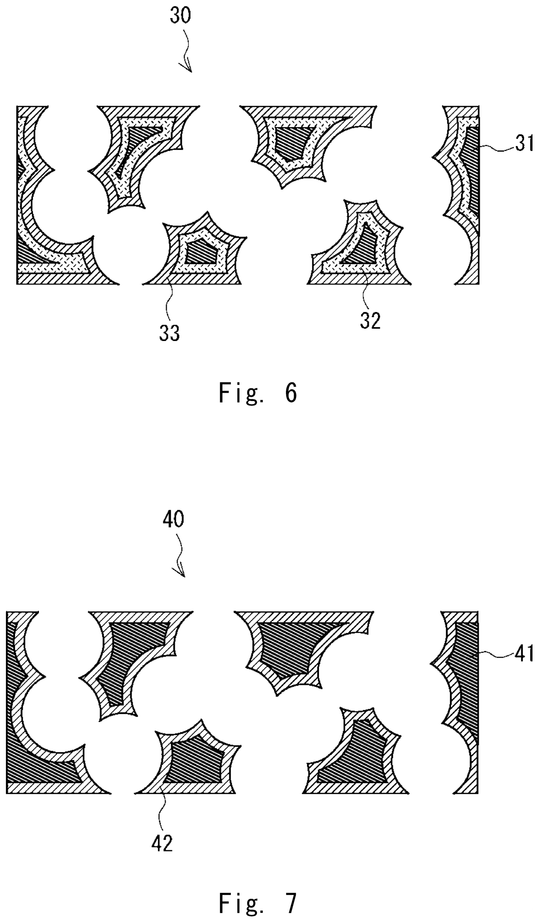

A catalyst including a nickel oxide layer containing NiOOH and a layer containing NiFe in this order on a nickel foam will be described with reference to Fig. 6. Fig. 6 is a schematic cross-sectional diagram of this catalyst. The catalyst 30 shown in the example in Fig. 6 includes a nickel oxide layer 32 containing NiOOH and a layer 33 containing NiFe in this order on a nickel foam 31. In the example shown in Fig. 6, the inner surfaces of pores also have the above-described layer structure. By having the above-described layer structure, the catalyst, while uses the nickel foam, has excellent durability even under an alkaline environment and becomes highly active.

The nickel oxide layer 32 is characterized in that it contains NiOOH. By having the nickel oxide layer, the catalyst according to this embodiment has more excellent durability and more excellent activity than catalysts in which a layer containing NiFe is directly formed directly on a nickel foam.

The nickel oxide layer may contain at least NiOOH, and may also contain other nickel oxides as long as the effects of this embodiment are obtained. Examples of other nickel oxides include NiO, Ni₂O₃, and the like.

The ratio of NiOOH in the nickel oxide layer is preferably 50 mass% or larger, more preferably 80 mass% or larger, and still more preferably 90 mass% or larger based on 100 mass% of the nickel oxide layer.

In the catalyst (I), the thickness of the nickel oxide layer is preferably 50 to 500 nm, and more preferably 100 to 400 nm. When the nickel oxide layer is 50 nm or larger, a catalyst having excellent durability and excellent activity can be obtained. Further, when the thickness of the nickel oxide layer is 500 nm or smaller, sufficient effects can be obtained.

The catalyst (I) includes a layer containing NiFe on the above-described nickel oxide layer. By forming the NiFe layer on the nickel oxide layer, the leaching of Fe is suppressed, and the catalyst has excellent durability.

The ratio of Fe in the catalyst (I) is preferably 4 to 20 mass% to the total amount of the catalyst including the nickel foam. When Fe is 4 mass%, a catalyst having excellent durability and excellent activity can be obtained. Further, when Fe is 20 mass% or smaller, sufficient effects can be obtained.

The thickness of the catalyst (I) is preferably 100 to 2,000 µm, and more preferably 200 to 1,600 µm. When the thickness is 100 µm or larger, a catalyst having excellent durability and excellent activity can be obtained.

Note that the thickness of each layer can be measured by a scanning electron microscope (SEM) and mapping by an energy dispersive X-ray analyzer (EDX). Further, the composition of each layer can be measured by X-ray photoelectron spectroscopy (XPS).

### (Method for Manufacturing Catalyst (I))

Next, a method for manufacturing the above-described catalyst (I) will be described. The method for manufacturing the catalyst (I) includes, first, a step of forming a nickel oxide layer containing NiOOH on a nickel foam. By forming the nickel oxide layer containing NiOOH on the nickel foam, a layer containing NiFe can be easily formed, and the leaching of the layer containing NiFe is suppressed.

Examples of the method for forming a nickel oxide layer on a nickel foam include a method for spraying NiOOH particles by an aerosol deposition method or the like, or a method for oxidizing a surface of a nickel foam. The method for oxidizing a surface of a base material is preferred because a nickel oxide layer can be easily formed on inner surfaces of the nickel foam. The method for oxidizing a surface of a base material is preferably electrochemical oxidation

In the electrochemical oxidation, for example, first, a nickel foam having a desired shape is prepared, and then, the nickel foam is immersed in an alkaline electrolytic solution or the like and oxidized by applying a voltage. Note that the nickel foam may be manufactured by a known method, or a commercial product may be used. Further, in the case where the nickel foam has an oxide layer, an acid treatment may be carried out as required. The thickness of the nickel oxide layer can be adjusted by adjusting the voltage application time.

Note that the formation of the nickel oxide layer can be checked by a Raman spectrum or the like.

Next, a layer containing NiFe is formed on the nickel oxide layer.

Examples of methods for forming a layer containing NiFe on a nickel oxide layer include a method for spraying NiFe particles by an aerosol deposition method or the like, or a method for electrodepositing Fe. The method for electrodepositing Fe is preferred because a layer containing NiFe can be easily formed on inner surfaces of the nickel foam.

Examples of electrodeposition of Fe includes a method in which Fe is electrodeposited by immersing an intermediate article in an electrolytic solution containing Fe²⁺ and applying a voltage. The thickness of the layer containing NiFe and the ratio of Fe in the catalyst according to this embodiment can be adjusted by adjusting the voltage application time.

### <Catalyst (II)>

A catalyst including a phosphide layer containing Ni₂P and Fe₂P on a nickel foam will be described with reference to Fig. 7. Fig. 7 is a schematic cross-sectional diagram of this catalyst. The catalyst 40 shown in the example in Fig. 7 includes a phosphide layer 42 containing Ni₂P and Fe₂P on a nickel foam 41. In the example shown in Fig. 7, inner surfaces of pores also have the above-described layer structure. By having the above-described layer structure, the catalyst, while uses the nickel foam, has excellent durability even under an alkaline environment and becomes highly active.

The shape of the nickel foam 41 is similar to that of the above-described catalyst (I), and its preferred mode is also similar thereto.

In the catalyst (II), the phosphide layer 42 contains Ni₂P and Fe₂P. In the catalyst (II), the phosphide layer contains, in particular, Fe₂P. Therefore, the catalyst (II) has more excellent durability and more excellent activity than those of catalysts in which a layer containing only Ni₂P is formed on a nickel foam.

The thickness of the catalyst (II) is preferably 100 to 2,000 µm, and more preferably 200 to 1,600 µm. When the thickness is 100 µm or larger, a catalyst having excellent durability and excellent activity can be obtained.

The ratio of P in the catalyst (II) is preferably 10 to 50 mass% and more preferably 20 to 30 mass% to the total amount of the catalyst in view of the durability and the activity.

The ratio of Fe in the catalyst (II) is preferably 1 to 10 mass% and more preferably 1 to 3 mass% to the total amount of the catalyst in view of the durability and the activity.

The ratio of the total amount of Ni₂P and Fe₂P in the phosphide layer is preferably 50 to 100 mass%, more preferably 70 to 100 mass%, and still more preferably 85 to 100 mass% to the total amount of the phosphide layer in view of the durability and the activity.

Further, the ratio between Ni₂P and Fe₂P in the phosphide layer is preferably 9:1 to 5:5 in mass ratio in view of the durability and the activity.

The thickness of the phosphide layer in the catalyst (II) is preferably 50 to 500 nm and more preferably 100 to 400 nm. When the thickness of the phosphide layer is 50 nm or larger, a catalyst having excellent durability and excellent activity can be obtained. Further, when the thickness of the phosphide layer is 500 nm or smaller, sufficient effects can be obtained.

Note that the thickness of the phosphide layer can be measured by a scanning electron microscope (SEM) and mapping by an energy dispersive X-ray analyzer (EDX). Further, the composition of the phosphide layer can be measured by X-ray photoelectron spectroscopy (XPS).

### (Method for Manufacturing Catalyst (II))

Next, a method for manufacturing the above-described catalyst (II) will be described. Examples of the method for manufacturing a catalyst (II) include a method for immersing a nickel foam in an iron ion solution and phosphorizing the nickel foam after the immersion. According to the manufacturing method in accordance with this embodiment, a phosphide layer containing Ni₂P and Fe₂P can be easily formed on a nickel foam, and the obtained catalyst has excellent durability and excellent activity.

In this manufacturing method, first, a nickel foam having a desired shape is prepared, and then, the nickel foam is immersed in an iron ion solution. The iron ion solution is prepared by dissolving a dissociative iron compound in a solvent. Examples of iron compounds include iron chloride, and those with which a trivalent iron ion is generated are prepared. The solvent contains, typically, water and may also contain other solvents. As other solvents, solvents having affinity with water are preferred, and examples of them include methanol, ethanol, and the like. The concentration of iron ions in the solution is not limited to any particular values, and may be, for example, 0.01 to 0.5 mol/l.

Further, the immersion time of the nickel foam is not limited to any particular values, and may be adjusted as appropriate in a range of, for example, 10 minutes to 6 hours. The nickel foam may be dried as required after the immersion.

Next, the nickel foam, which has been immersed in the solution, is phosphorized. By phosphorizing the nickel foam in a state in which iron ions are deposited on the surface of the base material, a phosphide layer containing Ni₂P and Fe₂P can be easily formed.

The phosphorization method is not limited to any particular methods, but a method in which a nickel foam is heated in the presence of a phosphorus compound is preferred. Specifically, examples of methods include a method in which a phosphorus compound and the above-described nickel foam, which has been immersed in the solution, are placed inside a furnace and heated under an inert gas atmosphere such as a nitrogen gas atmosphere.

In the case where an inert gas is supplied into the furnace during the heating, the phosphorization can be efficiently carried out by disposing the phosphorus compound on the upstream side and disposing the nickel foam on the downstream side.

The phosphorus compound is preferably a compound which decomposes at the heating temperature. Specific examples of phosphorus compounds include sodium hypophosphite and the like.

The heating temperature may be adjusted as appropriate in consideration of the decomposition temperature of the phosphorus compound, and is, for example, in a range of 300 to 600°C, and preferably in a range of 350 to 550°C.

The anode electrode 10 may further include a first diffusion layer 12 in addition to the above-described anode catalyst 11. The first diffusion layer 12 may be selected as appropriate from known gas diffusion layers, and its examples include a foamed metal layer such as a nickel foam and a porous carbon layer.

The cathode electrode 20 includes at least the cathode catalyst 21 and may also include a second diffusion layer 22. The cathode catalyst 21 is preferably a metal or a metal alloy. The metal or metal alloy may be selected as appropriate from known ones. Examples of metals or metal alloys include platinum, cobalt, nickel, palladium, iron, silver, gold, copper, iridium, molybdenum, rhodium, chromium, tungsten, manganese, ruthenium, metal compounds thereof, metal oxides thereof, and alloys containing two or more of these metals.

Further, the cathode catalyst 21 is preferably a porous material in view of the contact area with water and the diffusion of water and gas. Examples of porous catalysts include an aggregation of metal particles in which particles of the above-described catalyst metal are fused together, a foam of the above-described metal, and a porous material in the form of felt (nonwoven fabric), mesh, or the like formed from wires of a metal or a fibrous metal.

The cathode catalyst 21 may be used by coating a surface of the above-described metal with a known electrolyte polymer. Meanwhile, in this embodiment, since the ionic conductivity is obtained by having the alkaline aqueous solution move in the membrane electrode assembly 8, the ionic conductivity is excellent even when no electrolyte polymer is used. Further, the activity of the catalyst is further improved by not coating the cathode catalyst with any electrolyte polymer.

In particular, the cathode catalyst preferably includes a porous material of a metal or a metal alloy. Further, in order to achieve both the durability and the high activity, the cathode catalyst is preferably a catalyst including a layer containing Ru and a phosphide of a metal derived from the metal or the metal alloy on the porous material of the metal or the metal alloy (hereinafter referred to as a catalyst (III)).

### <Catalyst (III)>

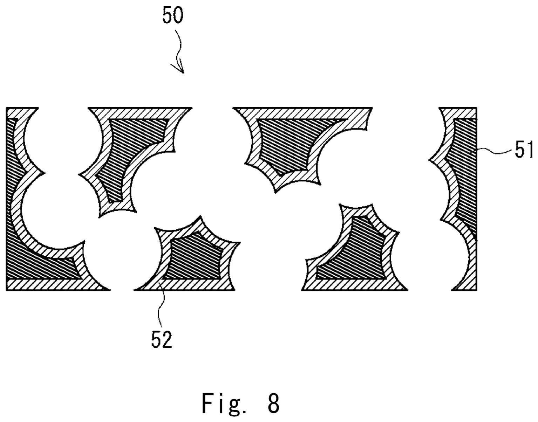

A catalyst including a layer containing Ru and a phosphide on a porous material of a metal or a metal alloy will be described with reference to Fig. 8. Fig. 8 is a schematic cross-sectional diagram of this catalyst. A catalyst 50 shown in the example in Fig. 8 includes a layer 52 containing Ru and a phosphide of a metal on a porous material 51. By having the above-described layer structure, both the durability and the high activity can be achieved.

The catalyst (III) is characterized in that it includes a layer containing Ru and a metal phosphide on a porous material. By adopting the composite layer of Ru and a metal phosphide, the catalyst has more excellent durability and more excellent activity than those of layers containing no phosphide.

The thickness of the catalyst (III) is preferably 100 to 2,000 µm, and more preferably 200 to 1,600 µm. When the thickness is 100 µm or larger, a catalyst having excellent durability and excellent activity can be obtained.

The metal (M) constituting the porous material may be any metal, but in order to make the manufacturing of the catalyst easier, a metal with which a phosphide can be formed is preferred. Specific examples of such metals include Fe, Cu, Ni, Ti, and the like. Ni or Ti is preferred in view of the durability and the activity of the catalyst. The metal constituting the porous material may be one type of metal or may be an alloy containing two or more types of metals. Further, the metal base material may contain other elements as long as the effects of this embodiment are obtained.

The ratio of Ru in the catalyst (III) is preferably 0.1 to 40 mass% and more preferably 0.5 to 30 mass% to the total amount of the catalyst in view of the durability and the activity.

The ratio of P in the catalyst (III) is preferably 10 to 50 mass% and more preferably 20 to 30 mass% to the total amount of the catalyst in view of the durability and the activity.

Further, the ratio between Ru and the metal phosphide in the layer containing Ru and the metal phosphide is preferably 9:1 to 5:5 in view of the durability and the activity.

The thickness of the layer containing Ru and the metal phosphide in the catalyst (III) is preferably 50 to 500 nm and more preferably 100 to 400 nm. When the thickness of the layer containing Ru and the metal phosphide is 50 nm or larger, a catalyst having excellent durability and excellent activity can be obtained. Further, when the thickness of the layer containing Ru and the metal phosphide is 500 nm or smaller, sufficient effects can be obtained.

Note that the thickness of the above-described layer can be measured by a scanning electron microscope (SEM) and mapping by an energy dispersive X-ray analyzer (EDX, EDS). Further, the composition of the above-described layer can be measured by X-ray photoelectron spectroscopy (XPS).

### (Method for Manufacturing Catalyst (III))

Next, a method for manufacturing the above-described catalyst (III) will be described. Examples of the method for manufacturing a catalyst (III) include a method for immersing a porous material of a metal or a metal alloy in a Ru ion solution and phosphorizing the porous material after the immersion. According to this manufacturing method, a layer containing Ru and a metal phosphide can be easily formed on a metal base material layer, and the obtained catalyst has excellent durability and excellent activity.

In this manufacturing method, first, a desired porous material is prepared, and this porous material is immersed in a Ru ion solution. The Ru ion solution is prepared by dissolving a dissociative ruthenium compound in a solvent. Examples of ruthenium compounds include ruthenium chloride. The solvent contains, typically, water and may also contain other solvents. As other solvents, solvents having affinity with water are preferred, and examples of them include methanol, ethanol, and the like. The concentration of iron ions in the solution is not limited to any particular values, and may be, for example, 0.01 to 0.5 mol/l.

The immersion time of the porous material is not limited to any particular values. The immersion time may be adjusted, for example, in a range of 1 to 48 hours, and is preferably 12 to 36 hours. It is inferred that by immersing the porous material for many hours, galvanic substitution of metal ions and Ru ions on the surface of the porous material occur, and as a result, the durability of the obtained catalyst is further improved. The porous material may be dried as required after the immersion.

Next, the porous material, which has been immersed in the solution, is phosphorized (Step (II)). By phosphorizing the porous material in a state in which Ru ions are present on the surface of the base material, a layer containing Ru and a metal phosphide can be easily formed.

The phosphorization method is not limited to any particular methods, but a method in which a metal base material is heated in the presence of a phosphorus compound is preferred. Specifically, examples of methods include a method in which a phosphorus compound and the above-described porous material, which has been immersed in the solution, are placed inside a furnace and heated under an inert gas atmosphere such as a nitrogen gas atmosphere.

In the case where an inert gas is supplied into the furnace during the heating, the phosphorization can be efficiently carried out by disposing the phosphorus compound on the upstream side and disposing the porous material on the downstream side.

The phosphorus compound is preferably a compound which decomposes at the heating temperature. Specific examples of phosphorus compounds include sodium hypophosphite and the like.

The heating temperature may be adjusted as appropriate in consideration of the decomposition temperature of the phosphorus compound, and is, for example, in a range of 300 to 600°C, and preferably in a range of 350 to 550°C.

The cathode electrode 20 may further include a second diffusion layer 22 in addition to the above-described cathode catalyst 21. The second diffusion layer 22 may be selected as appropriate from known gas diffusion layers, and its examples include a foamed metal layer such as a nickel foam or a porous carbon layer.

The water electrolysis apparatus according to this embodiment may include separators 13 and 23 disposed on the outer sides of the anode electrode 10 and the cathode electrode 20, respectively. There is no need to coat the material of the separators with platinum or the like, and the material used for the separators can be selected as appropriate. For example, the separators may be made of carbon or stainless steel. In the case where the separators 13 and 23 are conductive, the separator 13 may be used as a first main electrode and the separator 23 is used as a second main electrode. Further, a power supply 7 may be connected to the first and second main electrodes so that a voltage is applied across the cathode and the anode.

The separators 13 and 23 may have gas flow paths 14 and 24, respectively. Oxygen generated at the anode electrode 10 and hydrogen generated at the cathode electrode 20 are discharged through the gas flow paths 14 and 24, respectively, and stored in storage tanks or the like.

The power supply 7 is not limited to any particular power supplies, and can be selected as appropriate from known DC power supplies. Since the water electrolysis apparatus according to this embodiment exhibits an excellent response to the input power, it can be suitably used even for renewable energy such as photovoltaic power generation and wind power generation of which generated electric power widely fluctuates.

### [Examples]

The present invention will be described hereinafter in a more specific manner with reference to examples. Note that the present invention is not limited by descriptions below, and the present invention may be modified as appropriate without departing from the scope and spirit of the invention.

### <Manufacturing of Layer A>

### (1) Formation of Membrane of Hydrocarbon-based Polymer (a)

By referring to Japanese Unexamined Patent Application Publication No. 2021-042351, a cast membrane of a hydrocarbon-based polymer (a) (Trimethyl ammonium modified poly-(fluorene-alt-tetrafluorophenylene)) represented by the below-shown formula was formed. A membrane having a thickness of 30 µm, one having a thickness of 20 µm, and one having a thickness of 18 µm were created.

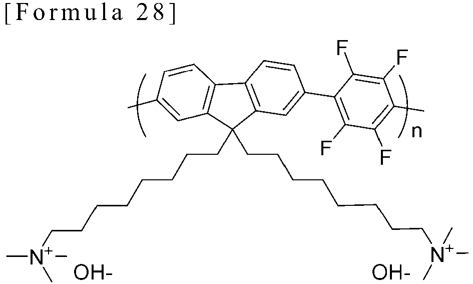

### (2) Manufacturing of Pore-Filling Membrane of Hydrocarbon-based polymer (a)

A porous base material made of polytetrafluoroethylene (PTFE) having a thickness of 30 µm and a dispersion liquid in which a hydrocarbon-based polymer (a) similar to that in the above-described Item (1) was dispersed were prepared. The dispersion liquid was dropped onto the porous base material of which the pores were filled with the solvent, so that the pores were filled with the polymer. A pore-filling membrane of the hydrocarbon-based polymer (a) was obtained by drying the obtained membrane at 100°C for 12 hours.

### [Example 1: Manufacturing of Membrane]

A membrane of a perfluoro-carbon polymer (b) having a structure represented by Formula (2) (where L²¹ is - OCF₂CF(CF₃)OCF₂CF₂-, and R²¹ is a sulfonic acid group) (Nafion, EW = 1,000, Thickness 15 µm) was prepared.

A membrane of Example 1 was obtained by bonding the membrane of the perfluoro-carbon polymer (b) on each of both sides of the cast membrane having a thickness of 20 µm obtained in the above-described manufacturing of the A layer.

### [Example 2: Manufacturing of Membrane]

A membrane of Example 2 was obtained in a manner similar to Example 1 except that the A layer was changed to a cast membrane having a thickness of 28 µm and the membrane of the perfluoro-carbon polymer (b) was changed to a membrane having a thickness of 7.5 µm in Example 1.

### [Example 3: Manufacturing of a Membrane]

A membrane of Example 3 was obtained in a manner similar to Example 1 except that the A layer was changed to a pore-filling membrane in Example 1.

### [Example 4: Manufacturing of a Membrane]

A membrane of Example 4 was obtained in a manner similar to Example 1 except that the A layer was changed to a cast membrane having a thickness of 30 µm in Example 1.

### [Example 5: Manufacturing of Membrane Electrode Assembly (MEA)]

### (Manufacturing Example 1: Manufacturing of Anode Catalyst)

A commercially available Ni foam was uniformly pressed to a thickness of 200 µm. The Ni foam was cut into 1cm² pieces, subjected to an acid treatment with HCl, and washed with ethanol and water. Next, an intermediate article was obtained by immersing the Ni foam in 1M KOH, applying 2.5 V vs RHE for one minute by using a 10cm² Ni foam counter electrode and an Hg/HgO reference electrode, oxidizing the surface of the Ni foam, and thereby forming a nickel oxide layer containing NiOOH. Next, the above-described intermediate article was immersed in an electrolytic solution which contains 25 mM Fe²⁺, (NH₄)₂SO₄, H₂SO₄, and water, and was degassed with N₂, and of which pH was adjusted to 3 or lower. Fe was electrodeposited by chronoamperometry using a Pt counter electrode and an Ag/AgCl reference electrode, and by doing so, an anode catalyst having a thickness of about 250 nm was obtained.

### (Manufacturing Example 2: Manufacturing of Cathode Catalyst)

A commercially available Ni foam was uniformly pressed to a thickness of 200 µm. An Ru ion solution was prepared by dissolving about 0.2 mg of RuCl₃ in 50 ml of deionized water. The nickel foam was immersed in this Ru ion solution and kept for 24 hours, and by doing so, galvanic substitution of Ni ions and Ru ions were made to occur on the surface of the substrate. After the immersion, the nickel foam was dried in the atmosphere, and a Ru-modified metal substrate was thereby obtained.

High-purity nitrogen was made to flow in the furnace at a flow rate of 60 SCCM, and sodium hypophosphite was disposed on the upstream side of the furnace and the Ru-modified metal substate, which has been immersed in the solution, was disposed on the downstream side. A cathode catalyst was obtained by raising the temperature at a rate of 3°C/min, and thereby carrying out phosphorization at 350°C for four hours.

### (Manufacturing of MEA)

An MEA of Example 5 was manufactured by disposing the above-described anode catalyst on one of the surfaces of the membrane of Example 2 and the above-described cathode catalyst on the other side thereof.

### [Evaluation]

### <Gas Permeability Evaluation>

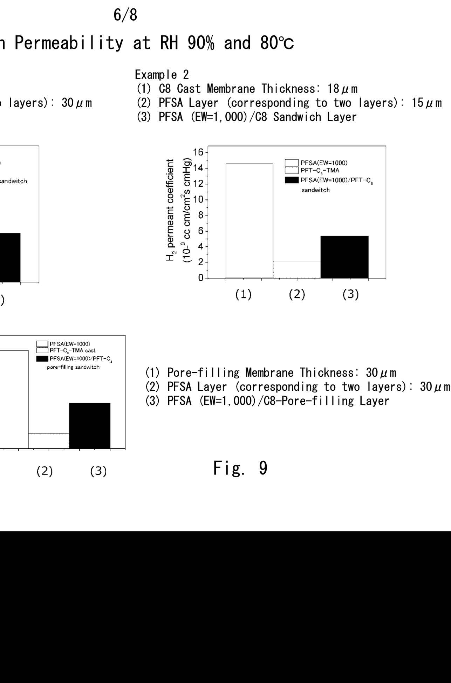

Hydrogen permeability of each of the membranes of Examples 1 to 3 was measured at a relative humidity (RH) of 90% and at a temperature of 80°C. As comparative examples, similar measurements were also carried out for cast membranes (having thicknesses of 20 µm and 18 µm) and a single-layer membrane of a pore-filling membrane obtained in the above-described manufacturing of the layer A, and for single-layer membranes (having thicknesses of 15 µm and 30 µm) of the perfluoro-carbon polymer (b) used in the above-described Example 1. Fig. 9 shows results. Graphs of the examples shown in Fig. 9 show, from left to right, results of (1) Single-layer membrane of the perfluoro-carbon polymer (b), (2) Single-layer membrane of the cast membrane or the pore-filling membrane, and (3) Membranes of Examples 1 to 3 (laminated membranes).

### <Radical Durability Evaluation>

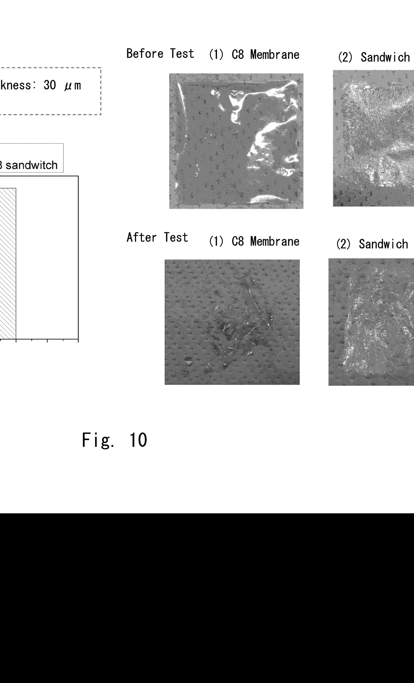

A Fenton's test was carried out on the membrane of Example 4 at 80°C by using a Fenton's reagent containing 3 wt% H₂O₂ and 2 µg/g of FeSO₄. For the comparison, a measurement was carried out on the single-layer membrane of the cast membrane (having thickness of 30 µm) obtained in the above-described manufacturing of the layer A. Fig. 10 shows results of residual weights after seven hours and photographs showing states before and after the measurement. In Fig. 10, Photograph (1) shows the cast membrane and Photograph (2) shows the membrane (laminated membrane) of Example 4. In the photographs, the upper parts shows the membranes before the test and the lower parts shows the membranes after the test.

### <MEA Performance Evaluation>

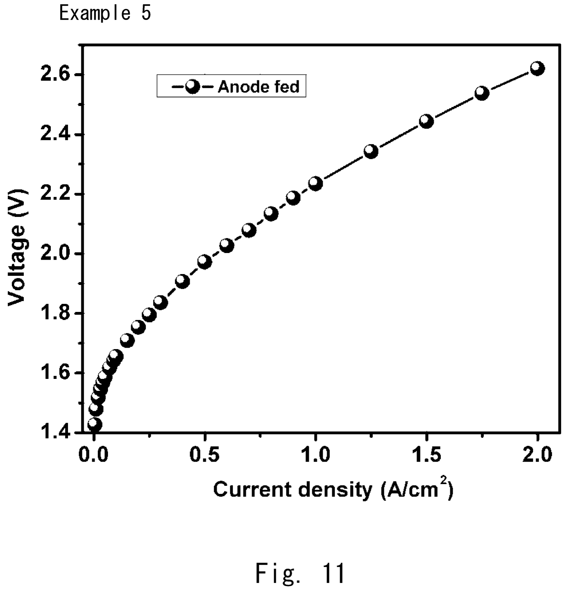

The performance of the solid-state alkaline water electrolysis cell was evaluated at a cell temperature of 80°C by supplying a 1M KOH aqueous solution (flow rate of 5 mL·min⁻¹) to the anode side. A charging/discharging apparatus (HJ1010SD8, manufactured by MEIDEN HOKUTO CORPORATION) and an impedance analyzer (Solartron 1260, manufactured by Solartron Analytical) were used for the cell evaluation. In the impedance test, a resistance when the cell was operated at a voltage of 1.5 V was measured by the impedance analyzer. Fig. 11 shows a polarization curve. Note that the cell resistance at 1.5 V was 0.314 Ωcm², and the voltage at 1 Acm⁻² was 2.23V, indicating that the cell exhibited high water electrolysis performance.

Based on the above-described results, it has been shown that a membrane according to the present invention has excellent radical durability and low gas permeability, and that a membrane electrode assembly and a water electrolysis apparatus using a membrane according to the present invention can achieve high water electrolysis performance.

This application is based upon and claims the benefit of priority from Japanese patent application No. 2022-211800, filed on December 28, 2022, the disclosure of which is incorporated herein in its entirety by reference.

### Reference Signs List

1: Water Electrolysis Apparatus, 5: Membrane, 6: Cell, 7: Power Supply, 8: Membrane Electrode Assembly, 10: Anode Electrode, 11: Anode Catalyst, 12: First Diffusion Layer, 13: Separator, 14: Gas Flow Path, 20: Cathode Electrode, 21: Cathode Catalyst, 22: Second Diffusion Layer, 23: Separator, 24: Gas Flow Path, 30, 40: Anode Catalyst, 31, 41: Nickel Foam, 32: Nickel Oxide Layer, 33: Layer containing NiFe, 42: Phosphide Layer, 50: Cathode Catalyst, 51: Porous Material of Metal or Metal Alloy, 52: Layer containing Ru and Phosphide of Metal, 70: Layer B, 71: Perfluorocarbon Polymer (b), 72: Cluster, 81: Electrolyte Membrane, 82: Anode, 83: Cathode, A, B1, B2: Layer.

## Claims

1. A membrane having a laminated structure comprising a layer B1, a layer A, and a layer B2 in this order, wherein,
the layer A contains a hydrocarbon-based polymer (a) which has an ionic group and may be fluorine-substituted; and,
each of the layers B1 and B2 contains a perfluoro-carbon polymer (b) having an ionic group.

2. The membrane according to claim 1, wherein the hydrocarbon-based polymer (a) includes a polyarylene polymer.

3. The membrane according to claim 1, wherein the hydrocarbon-based polymer (a) contains a constituent unit represented by a below-shown General Formula (1), 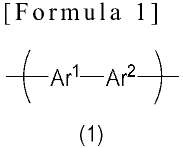 where,
Ar¹ is an aromatic group having an ionic group, or a group in which an aromatic ring having an ionic group is connected through a single bond, in which a plurality of Ar¹ are identical to each other or different from each other,
Ar² is an aromatic group having no ionic group, or a group in which two or more aromatic rings having no ionic group are connected through a single bond or a spiro atom, in which a plurality of Ar² are identical to each other or different from each other, and,
the aromatic ring of Ar¹ is connected to the aromatic ring of Ar² through a single bond.

4. The membrane according to claim 1, wherein,
the layer A contains a porous base material and the hydrocarbon-based polymer (a), and,
pores of the porous base material are filled with the hydrocarbon-based polymer (a).

5. The membrane according to claim 4, wherein the porous base material is a polyolefin-based porous base material.

6. The membrane according to claim 1, wherein a thickness of the layer A is 10 to 100 µm.

7. The membrane according to claim 1, wherein the ionic group of the hydrocarbon-based polymer (a) is an acidic group and has proton conductivity.

8. The membrane according to claim 1, wherein the ionic group of the hydrocarbon-based polymer (a) is a group selected from a quaternary ammonium group and an imidazolium group, and has anionic conductivity.

9. The membrane according to claim 1, wherein the perfluoro-carbon polymer (b) has a structure represented by a below-shown General Formula (2A), 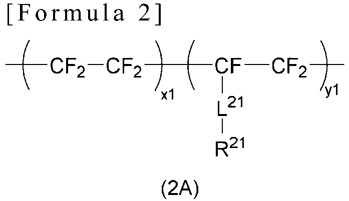 where,
R²¹ is an ionic group,
L²¹ is a divalent linking group, and,
x1 and y1 are each independently an integer of 1 or larger.

10. The membrane according to claim 1, wherein the ionic group of the perfluoro-carbon polymer (b) is a carboxylic acid group, a sulfonic acid group, or an amino group.

11. The membrane according to claim 1, wherein the layer B1 and/or the layer B2 further contains a radical scavenger.

12. The membrane according to claim 1, wherein thicknesses of the layers B1 and B2 are each independently 0.05 to 20 µm.

13. A membrane electrode assembly comprising:,
a membrane according to any one of claims 1 to 12;,
an anode catalyst; and,
a cathode catalyst.

14. A water electrolysis apparatus comprising the membrane electrode assembly according to claim 13.
